# EUROPEAN PATENT APPLICATION

(11) **EP 4 589 999 A1**
(43) Date of publication of application: **23.07.2025**
(21) Application number: 23876554.9
(22) Date of filing: 28.09.2023
(51) Int. Cl.: H04W 4/44

(54) **ELECTRONIC DEVICE, COMMUNICATION METHOD, AND STORAGE MEDIUM**

(30) Priority: 10.10.2022 CN 202211234515
(71) Applicant: Sony Group Corporation, Tokyo 108-0075 (JP)
(72) Inventor: CUI, Tao, Beijing 100027 (CN); LI, Lantao, Beijing 100027 (CN)
(74) Representative: D Young & Co LLP
(86) International application number: PCT/CN2023/122384
(87) International publication number: WO 2024/078351

(57) **Abstract**

The present disclosure relates to an electronic device, a communication method and a storage medium. An electronic device for a vulnerable road user (VRU) comprises processing circuitry configured to in response to a trigger event, generate a service request message which includes an identifier uniquely identifying a terminal device and service preference information of the VRU, transmit the service request message to a network-side device, and receive, from the network-side device, a service configuration determined based on the service preference information.

## Description

### FIELD OF THE INVENTION

The present disclosure relates to the technical field of wireless communication. More particularly, the present disclosure relates to an electronic device, a communication method, and a storage medium that provide communication applicable to Vulnerable Road User scenarios.

### BACKGROUND

There has already been a role of vulnerable road user (VRU) in Vehicle to Everything (V2X) service application architectures listed by application-layer interaction requirements of current enhanced V2X services. The VRU refers to a group of users that are vulnerable to traffic accidents, such as pedestrians, bicyclists, motorcyclists, and the like. In a scene such as automatic driving, vehicle road coordination or the like, the VRU is an object that needs protection.

The European Telecommunications Standardization Institute (ETSI) classifies the services and communications between VRUs, vehicles, Road Side Equipment (RSE), and the network into 6 categories, wherein interactions between the VRUs and between the VRU and the RSE are inventive, but the ETSI has its departure point mainly from protection of pedestrians, and thus the protection of VRUs is still achieved relying on the vehicles, the roadside equipment, or the network.

As an organization converging communication enterprises and vehicle manufacturers, the 5G Automobile Alliance (5GAA) conducts corresponding research in various directions related to Internet of Vehicles. The research contents in the direction of VRU is mainly known in VRU high-risk areas (such as school doorways), interactions between VRUs and vehicles (mutual avoidance), and information and algorithm related to the VRU itself. However, the VRU research by the 5GAA is an overall design and does not define any content of the interaction between devices.

At present, the domestic standard only relates to one VRU application scenario, namely VRU identification. The VRU identification is to identify a VRU with a slow traveling speed and give an warning to vehicles in order to improve sensation for the VRU and avoid traffic accidents such as collision with the VRU.

However, none of the existing Chinese and foreign VRU-related standards considers the VRU as an action subject to be alerted by warning. Accordingly, there is a need for an improved VRU-centric communication interaction process. In addition, a terminal device of the VRU has characteristics such as sensitive power consumption, low positioning accuracy, low transmitting and receiving power and the like, which need to be considered when designing communication suitable for the VRU scenario.

### SUMMARY OF THE INVENTION

The above-described needs are met by applying one or more aspects of the present disclosure.

A brief summary regarding the present disclosure is given here to provide a basic understanding on some aspects of the present disclosure. However, it will be appreciated that the summary is not an exhaustive description of the present disclosure. It is not intended to identify key portions or important portions of the present disclosure, nor to limit the scope of the present disclosure. It aims at merely describing some concepts about the present disclosure in a simplified form and serves as a preorder of a more detailed description to be given later.

According to one aspect of the present disclosure, there is provided an electronic device for a vulnerable road user (VRU), comprising: processing circuitry configured to in response to a trigger event, generate a service request message which includes an identifier uniquely identifying a terminal device and service preference information of the VRU; transmit the service request message to a network-side device; and receive, from the network-side device, a service configuration determined based on the service preference information.

According to one aspect of the present disclosure, there is provided an electronic device for a network-side device, comprising: processing circuitry configured to receive a service request message from a terminal device of a vulnerable road user (VRU), wherein the service request message is generated in response to a trigger event and includes an identifier uniquely identifying the terminal device and service preference information of the VRU; determine a service configuration for the VRU based on the service preference information; and transmit the service configuration to the terminal device of the VRU.

According to one aspect of the present disclosure, there is provided an electronic device for a vehicle, comprising: processing circuitry configured to receive a V2X warning for a vulnerable road user (VRU) from a road side unit (RSU); compare a difference between the V2X warning and a real-world scene; and adjust a priority of the V2X warning based on a result of the comparison.

According to one aspect of the present disclosure, there is provided a communication method comprising the steps performed by the processing circuitry of any of the above electronic devices..

According to one aspect of the present disclosure, there is provided a non-transitory computer-readable storage medium comprising executable instructions which, when executed, implement the above communication method.

### DESCRIPTION OF THE DRAWINGS

A better understanding of the present disclosure may be achieved by referring to a detailed description given hereinafter in connection with accompanying drawings, wherein the same or similar reference signs are used to indicate the same or similar elements throughout the drawings. The drawings are to be included in the specification and form a part of the specification along with the following detailed descriptions, for further illustrating embodiments of the present disclosure and for explaining the theory and advantages of the present disclosure. Wherein,
FIG. 1 illustrates an exemplary system architecture involving VRUs according to an embodiment of the present disclosure;
FIG. 2 illustrates an exemplary interaction flow for a VRU UE to access a service according to an embodiment of the present disclosure;
FIG. 3 illustrates a flow of autonomous group management of VRU UEs according to an embodiment of the present disclosure;
FIG. 4 illustrates an exemplary interaction flow for a VRU UE to access a service according to an embodiment of the present disclosure;
FIG. 5 illustrates a security assistance service flow based on a PC5 interface according to an embodiment of the present disclosure;
FIG. 6 illustrates a security assistance service flow based on a Uu interface according to an embodiment of the present disclosure;
FIGS. 7A and 7B illustrate an electronic device for a VRU and a communication method thereof according to an embodiment of the present disclosure;
FIGS. 8A and 8B illustrate an electronic device for a network-side device and a communication method thereof according to an embodiment of the present disclosure;
FIG. 9 illustrates an example block diagram of a computer that may be implemented as a terminal device or a control device according to an embodiment of the present disclosure;
FIG. 10 illustrates a first example of schematic configuration of a base station according to the present disclosure;
FIG. 11 illustrates a second example of schematic configuration of a base station according to the present disclosure;
FIG. 12 illustrates an example of schematic configuration of a smart phone according to the present disclosure; and
FIG. 13 illustrates an example of schematic configuration of an automobile navigation device according to the present disclosure.

Further features and aspects of the present disclosure will become apparent from the following description with reference to the attached drawings.

### DETAILED DESCRIPTION OF PREFERRED EMBODIMENTS

Various illustrative embodiments of the present disclosure will be described hereinafter with reference to the drawings. For purpose of clarity and simplicity, not all implementations of the embodiments are described in the specification. Note that, however, many settings specific to the implementations can be made in practicing the embodiments of the present disclosure according to specific requirements, so as to achieve specific goals of the developers. In addition, it should be understood that although development work may be complex and laborious, such development work is only a routine task for those skilled in the art who benefit from the present disclosure.

**In** addition, it should be noted that to avoid obscuring the present disclosure with unnecessary details, the figures illustrate only steps of a process and/or components of a device that are closely related to the technical solutions according to the present disclosure. The following description of exemplary embodiments is illustrative only and is not intended as any limitation on the present disclosure and its application.

Merely for convenient explanation, one or more aspects of the present disclosure may be described below in combination with V2X. However, it should be noted that this is not a limitation on the scope of application of the present disclosure. One or more aspects of the present disclosure can also be applied to various application architectures that are commonly used or to be developed in future.

A conventional V2X scenario usually takes a vehicle as an action subject. With vehicle information provided by sensors, on-vehicle terminals, electronic tags and the like arranged on a vehicle, the vehicle implements intercommunications such as Vehicle to Vehicle (V2V), Vehicle to Pedestrian (V2P), Vehicle to Infrastructure (V2I) or Vehicle to Network (V2N) through various communication modes including Sidelink.

A VRU, for example, a pedestrian or a non-pedestrian such as a bicyclist, tends to act as a protection object in a passive manner. However, certain types of VRUs may have trusted moving capability, and thus there is a need for VRU-centric communication service. Considering that a terminal device equipped by the VRU may be limited in power, processing performance and positioning capability, communications for the VRU need to be specifically designed in terms of positioning, power saving, user requirement and the like.

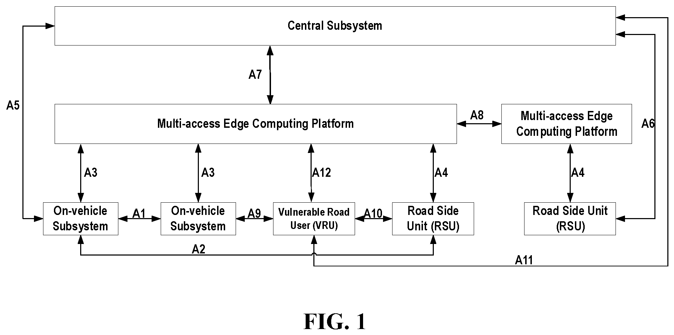

FIG. 1 illustrates an example system architecture involving VRUs according to an embodiment of the present disclosure. The system architecture may be used to implement, for example, an enhanced V2X service application architecture. It is noted that FIG. 1 illustrates only one of many types and possible arrangements of the communication system; features of the present disclosure may be implemented in any of a variety of systems as needed.

As shown in FIG. 1, the exemplary system may include a Central Subsystem (CSS), a Multi-access Edge Computing (MEC) platform, an on-vehicle subsystem, a Road Side Unit (RSU), and a VRU. The central subsystem has a capability of communicating with the on-vehicle subsystem, road subsystem, VRU and the like. The central subsystem has capabilities of receiving, storing, processing and distributing global data, and is responsible for global information perception and global service strategy control. Typically, the central sub-system may be implemented in a core network unit (e.g., Application Function (AF)) or an Application server.

The road subsystem may include one or more of the RSU, the MEC platform, and the roadside sensing device. The roadside sensing device is deployed in areas such as a crossroad, an overpass, or an auxiliary lane of an arterial road. The roadside sensing device has a specific sensation range, for example, a sensation range with an expanded range centered on a sidewalk part of the crossroad, or a sensation range as a junction of a non-motor vehicle lane and a motor vehicle lane of the overpass. The roadside sensing device has a capability of identifying VRUs and vehicles in the sensation range thereof by being equipped with a sensing device such as a camera sensor, a laser radar (lidar) sensor, a radar sensor or the like, and comprises a capability of identifying a type, size, and mobility(speed and direction) of the VRUs and the vehicles.

The RSU is a communication unit having a (wired) connection with the roadside sensing device and the roadside MEC platform. The RSU may even be integrated with the roadside sensing device and/or the MEC platform. The RSU may be provided with a PC5 communication capability to communicate wirelessly with the vehicles or VRUs within its coverage range.

The roadside MEC platform is generally deployed at a roadside position close to the RSU and associated roadside sensing device, and determines a risk of mutual collision between the vehicles and the VRUs according to road conditions (for example, through potential energy analysis of the vehicles, and then judgement of the safety risk of a certain vehicle to surrounding objects) by analyzing road information (including vehicle information, VRU information, traffic light information and the like) collected by the RSU and road information (movement information of various vehicles and VRUs, including original or processed video data streams, 3D point cloud data and the like) captured by the roadside sensing devices, and recording historical trajectories of the vehicles and the VRUs. In the MEC platform, computing resources can be deployed to provide support for meeting computing requirements of communication services (such as communication and computation fusion service). As an example, the MEC platform may be implemented in a Radio Access Network (RAN).

The VRUs are of diverse types, including pedestrians, bicyclists, motorcyclists, electric bicyclists, powered two-wheeler drivers, and the like. Terminal device of the VRU (hereinafter referred to as VRU UE) can transmit data information such as position, speed, traveling direction, traveling trajectory and the like of the vulnerable road user to the on-vehicle subsystem, the road side unit, the central subsystem and the multi-access edge computing platform, and can receive application-layer information transmitted from the on-vehicle subsystem, the road side unit, the multi-access edge computing platform and the central subsystem.

Depending on whether the VRU UE supports V2X communication or not, the system is required to support A9, A10, A11 and A12 interfaces (for VRU UE with V2X communication capability), or A1, A2, A3 and A4 interfaces (for VRU UE without V2X communication capability), respectively, wherein each of the A9 to A12 interfaces is a VRU-related interface, the A9 and A10 interfaces are based on V2X (e.g., LTE-V2X or NR-V2X) short range communication technology, so that the VRU UE can communicate with the RSU, vehicle device, or another terminal device, and the A11 and A12 interfaces are based on Uu (e.g., LTE Uu or NR Uu) cellular communication technology, so that the VRU UE can communicate with the central subsystem or MEC platform via a base station.

It should be noted that the term "base station" as used in the present disclosure is an example of a network control device and has its full breadth of ordinary meaning. For example, in addition to gNB and ng-eNB specified in the 5G communication standard, the "base station" may also be, for example, an eNB in the LTE communication system, a remote radio head, a wireless access point, or a communication device performing similar functions, depending on a scenario in which the technical solution of the present disclosure is applied. The following sections will describe application examples of the base station in detail.

Additionally, in the present disclosure, the term "UE" or "terminal device" has its full breadth of ordinary meaning, such as a mobile phone, handheld device, media player, computer, laptop, tablet, On Board Unit (OBU), or vehicle, Road Side Unit (RSU), or almost any type of wireless device. In some cases, the terminal device may perform communications using multiple wireless communication technologies. For example, the terminal device may be configured to perform communications using one or more of GSM, UMTS, CDMA2000, WiMAX, LTE-A, WLAN, NR, Bluetooth, or the like.

In the present disclosure, a VRU and its terminal device (i.e., VRU UE) may be distinguished from each other, but it should be understood that they may be used interchangeably in some occasions, especially when describing an operation, its executive entity being a VRU or a VRU UE has the same meaning.

According to an embodiment of the present disclosure, in order to enable a VRU to participate in smart traffic (such as vehicle-road cloud cooperation) as an executive subject, we propose to consider communication interactions between the VRU UE and the RSU, vehicle and/or network (core network, central cloud or the like) by focusing on the VRU and mainly pursuing security requirements of the VRU.

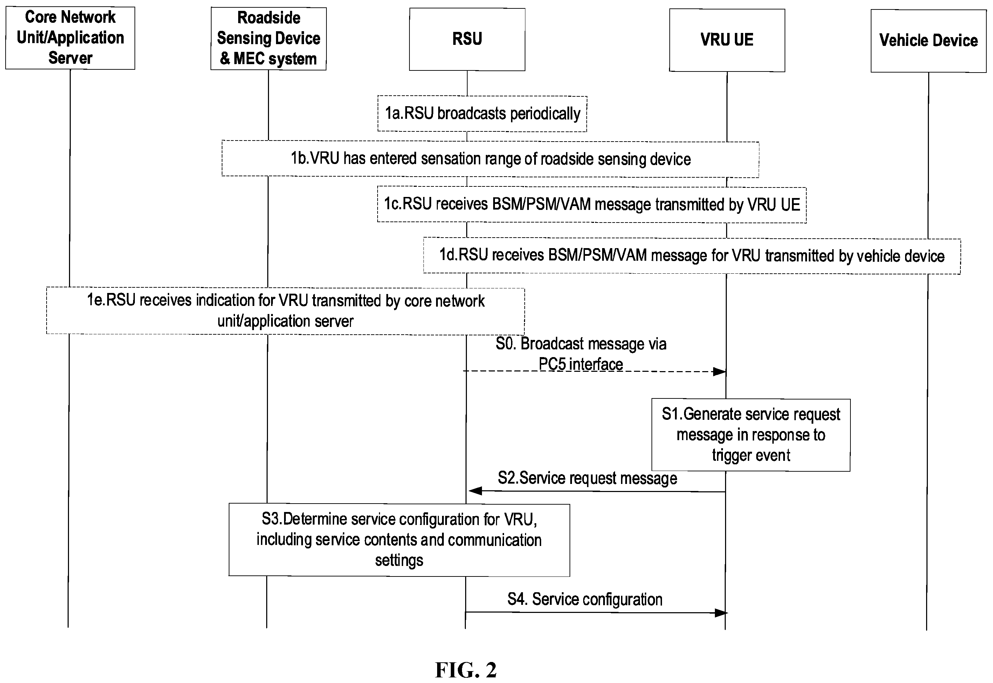

FIG. 2 illustrates an exemplary interaction flow for a VRU UE to access/register a service according to an embodiment of the present disclosure. In this example, the VRU UE has a V2X communication capability, enabling short range communications with, for example, RSUs, vehicle devices and the like using a PC5 interface.

As shown in FIG. 2, the flow may begin at step S1 in which the VRU UE generates a service request message in response to a trigger event in order to register a service applicable to the VRU.

According to an embodiment of the present disclosure, the VRU UE requesting a service is triggered by a specific event, rather than search for the RSU all the time, which helps save power of the VRU UE.

In one example, the trigger event includes the VRU UE receiving a broadcast message from the RSU, as shown at step S0 in FIG. 2. The RSU sends the broadcast message via a PC5 interface (e.g., the A10 interface in FIG. 1) so that when the VRU UE is about to enter or is entering the coverage range of the RSU, an upper layer application function for the VRU UE to generate a service request message can be triggered.

As shown in Example 1a in FIG. 2, the RSU may periodically transmit broadcast messages in its coverage range at a regular interval, notifying surrounding VRU UEs and vehicle devices of its presence.

In different examples, the RSU may cooperate with other functional entities to trigger the transmission of broadcast message to the VRU UE. For example, several exemplary scenarios are listed in FIG. 2:
1b) a roadside sensing device associated with the RSU monitors that a new VRU has entered its sensation range, and sends information to the RSU so as to trigger the RSU to transmit a broadcast message to VRU UE;
1c) the RSU receives a message such as Basic Security Message (BSM)/Personal Security Message (PSM)/VRU Awareness Message (VAM) transmitted by the VRU UE (e.g., periodically), knows that a VRU is in its vicinity, and then is triggered to transmit a broadcast message to the VRU UE;
1d) the RSU receives a message such as BSM/PSM/VAM transmitted by a certain vehicle device, which contains information that the vehicle has sensed the VRU, knows that there is a VRU in a specific area, and thus is triggered to transmit a broadcast message to the VRU UE;
1e) the RSU receives an indication from a core network unit (e.g., an application function, AF) or an application server, which knows that the VRU is about to enter the coverage range of the RSU based on location information of the VRU UE, and thus triggers the RSU to transmit a broadcast message to the VRU UE.

Addition or alternatively to receiving the broadcast message from the RSU, the VRU UE may detect the following as a trigger event (not shown in FIG. 2):
a) the VRU UE receives and analyzes data (such as position information, speed information, direction information and the like of a vehicle contained in message-type data such as BSM/PSM/VAM or the like) transmitted by surrounding vehicles/roadside devices via the PC5 interface, and finds that a vehicle around the VRU is approaching at a certain speed, so that the VRU is at a certain safety risk;
b) the VRU UE receives an indication from a core network unit or a specific application server via a Uu interface, for example, the core network/base station finds that the VRU UE is close to a high risk area by tracking the VRU UE, so as to trigger the VRU UE to actively search for a nearby service provider device. Additionally, the core network/base station may indicate to the VRU UE a device ID or IP address, etc. of a particular RSU in its vicinity, in order for the VRU UE to search for the particular RSU device;
c) the VRU UE finds that the VRU is about to enter or is entering a high-risk area, such as an intersection, a road junction, a road section with a high rate of accidents, a side road or the like, based on position information and electronic map of the VRU UE;
d) the VRU UE has a battery level lower than a certain threshold, and needs a roadside device to provide a related assistance service, for example, it desires a RSU to provide positioning assistance, switches from active self-security analysis monitoring to passive MEC security analysis monitoring, or the like.

It should be noted that the above-described scenarios are merely exemplary but not limiting, and that the VRU UE may be triggered to request a service depending on other scenarios, for example, a pedestrian or non-motor driver may actively instruct the VRU UE to seek an assistance service, and so on.

The broadcast message transmitted by the RSU to the VRU UE may include various information about the service supported by the RSU, including but not limited to: service contents that the RSU can provide, including a service type (e.g., collision avoidance/road risk warning, collaborative traffic join and lane change, positioning assistance, message relay/collective forwarding, or the like), and service contents corresponding to individual service types (e.g., coverage range, positioning accuracy, or the like); communication settings that the RSU can support for each of the services, such as interval/frequency of communication (an unfixed value, preferably there may be a list of several optional frequencies for a certain service type), communication coverage (a different service may correspond to a different range), and the like.

In response to the trigger event, the VRU UE may generate a service request message requesting access to the service according to application service requirements/device configuration. By way of example but not limitation, the service request message may include at least:
- a device identifier of the VRU UE for uniquely identifying the VRU UE in subsequent interactions. The device identifier may not be limited to an identifier of the VRU UE itself, or a 3GPP identity such as a SUbscription Permanent Identifier (SUPI), and may further include: a device application identifier of an upper-layer application running on the VRU UE; other identification information associated with the VRU, such as a fixed Internet of Things (IoT) device ID, such as a RFID which can be bound to a device such as a bicycle or an electric bicycle and to a user thereof;
- service preference information, including various information of the service that the VRU wishes to access. For example, the service preference information may indicate at least one of:
   - type of the service that the VRU desires, for example, including at least one of: a collision avoidance/road risk warning service for warning the VRU of possible collision risk or other road risks; a collaborative traffic join and lane change service for assisting the VRU to complete traffic joining, lane changing or the like; a positioning assistance service for assisting the VRU in positioning by means of GNSS, Bluetooth, BWP or the like; a message relay/collective forwarding service, through which the VRU requests a RSU to forward a message transmitted by the VRU so as to enlarge the coverage range of the message;
   - communication pattern for each service, including transmit only (Tx only), receive only (Rx only), and transmit and receive (Tx + Rx). The communication pattern herein is not fixedly corresponding to communication capability of the VRU UE, but a communication pattern for the VRU UE in subsequent communications with the RSU, and may be adjusted according to specific application or service contents, or over time. The communication pattern may also have a finer granularity, such as a frequency of transmitting and receiving packets by the VRU UE. In a case where a plurality of services are involved, these services may share the same communication pattern or may have different communication patterns;
   - mode for the VRU to receive a warning alert, for example, the VRU UE triggers vibration, voice, or text /animation display alert after receiving a warning alert message from the RSU, and a different alert mode may have an influence on determination of a different Time-To-Collision (TTC) threshold and other risk determination methods, and even on whether the RSU alerts the VRU UE or not under different conditions. For example, a voice alert may take slightly more time than a vibration, while displaying text or animation may take more time. In addition, assuming that the VRU of a bicycle/electric bicycle type is alerted by displaying text, and the safety risk is a forward collision risk, especially vehicles right in front of the lane, attention of the VRU to the front field of view should not be dispersed, and in a backward/side collision risk, such alert may be selectively triggered for the VRU;
   - a trigger condition for the VRU to receives a risk warning alert, such as warning distance (a degree that a vehicle approaches the VRU), warning potential energy threshold (a potential energy risk value obtained by synthesizing various factors such as current speed, mass, brake force and the like of the vehicle), a predicted collision value (trajectory prediction) of TTC, an out-of-control warning of the vehicle, a risk warning of goods carried by the vehicle (such as steel pipes, rebars, inflammable and explosive articles, or the like), and so on. Extremely, the VRU can be set to never be alerted, with a mode of ensuring the safety of the VRU by the RSU and the vehicle cooperatively.

Optionally, the service request message may also include other information needed for the service, such as:
- VRU type, such as a pedestrian, a cyclist, an electric cyclist, a motorcyclist, or the like;
- information such as movement capability and brake force of the VRU, mainly for a non-motor vehicle such as an electric cycle, a motorcycle or a bicycle, movement performance (acceleration, deceleration, steering and the like) and brake performance of the cycle can be roughly determined according to information such as the VRU type, non-motor vehicle model and service life of the VRU and the like;
- positioning capability of the VRU UE, such as positioning mode, positioning accuracy, confidence and other data;
a predetermined trajectory/route of the VRU UE, such as a navigation route set by the user in a navigation application.

In the example where the VRU UE receives the broadcast message from the RSU, the VRU UE may preferably generate a service request message with reference to information contained in the broadcast message. Based on the broadcast message from the RSU, it is possible for the VRU UE to know which services the RSU supports and the service content and/or communication setting for each of the services, and to determine therefrom a service needed by the VRU UE and its settings to improve an efficiency of service customization.

In step S2 shown in FIG. 2, the VRU UE may transmit the generated service request message to the RSU, for example, via a PC5 interface (e.g., the A10 interface in FIG. 1).

In step S3, the RSU and related system device receive and parse the service request message from the VRU UE and determine a service configuration for the VRU UE. The executive subject of this step may vary depending on the system architecture and the service type. For example, for an architecture where the MEC platform assumes most of management and computing functions, the RSU may forward the service request message from the VRU UE to the MEC platform, which may then determine service contents and/or service communication settings for the VRU UE. The RSU may also perform the determining step on its own if the RSU has certain computational resources and the service is mainly provided by the RSU.

In particular, the RSU or MEC platform may determine a service configuration based on the service preference information of the VRU and optionally other information included in the service request message, wherein the service configuration may include, for example, the type, contents, and communication settings of the service determined for the VRU. The service preference information of the VRU gives the VRU's preference to the service, mainly on the basis of which the RSU or MEC platform can implement service customization.

For example, in a non-limiting example where the VRU requires collision avoidance warnings, a collision avoidance warning service can be customized accordingly for the VRU, including when to trigger a warning (e.g., when a vehicle is approaching a certain range of the VRU), warning alert mode (e.g., voice), communication pattern (e.g., VRU UE receives only), warning (message's) period/frequency (e.g., once in 10 seconds), and so forth. However, depending on different service types, the RSU or MEC platform may also refer to various information, such as location information and mobility information of the VRU, device capability information and navigation data reported by the VRU UE, real-time road condition known from a roadside sensing device, and the like.

Preferably, the RSU or MEC platform also has a capability to update the communication settings (e.g., communication period/frequency) based on real-time changes in the above information and send the updated communication settings to the VRU UE. For example, when the VRU enters the sensation range of a roadside sensing device associated with the RSU, and is located in a safe area such as a sidewalk, as the VRU gradually advances close to a crossroad or a trajectory of the VRU is cutting into a motor vehicle lane, the VRU may face different degrees of risks in different environments, and then the frequency of reporting the position of the VRU UE and the service contents may need to be changed, for example, in a low risk area, the VRU UE only sends messages at a low frequency and opens only a short reception window, and when the VRU UE is in a high risk area, the reception window needs to be extended.

According to some embodiments of the present disclosure, determining a service configuration for the VRU includes implementing group management for the VRU. One purpose of the group management is to group and uniformly manage VRUs having the same or similar communication behavior and communication requirements. The most central is to provide the same or similar service content to the grouped VRU UEs. For example, after grouping according to risk levels, different degrees of security monitoring can be performed on VRUs in different risks, for example, MEC computational power is preferentially assigned to the security monitoring of VRUs in a high risks, so as to provide high-priority\high-frequency data communication service.

The RSU or MEC platform may implement the grouping based on various factors, including but not limited to at least one of:
- grouping VRUs according to current locations and mobility of the VRUs, or types, capabilities and physical information of the VRUs. For example, the RSU at a street intersection groups pedestrians on the sidewalk, non-motor vehicles on the non-motor vehicle lane, motorcycles/electric motorcycles/powered tricycles on the motor vehicle lane according on their types; or for example, for a plurality of pedestrians in the sensation range of a roadside sensing device, the pedestrians are divided into a plurality of groups according to coincidence of their movement trajectories with histories /intentions of these people; or for example, bicycles running on the non-motor lane can be grouped according to their speeds;
- grouping according to current risk levels of VRUs. For example, VRUs with few vehicles nearby are defined as VRUs of a low-risk group, VRUs such as bicycles, electric cycles and the like close to a motor vehicle lane are grouped into a medium-risk group, and VRUs that have collision risks or are above to join with motor vehicles are grouped into a high-risk group. The risk level grading and management processing can realize on-line accessibility of members, risk analysis and monitoring of members, risk alert/traffic instruction intervention of members, and the alerting information can be transmitted by transmission of the information to the whole group, with a high accuracy and a high efficiency;
- grouping according to service types, transmitting and receiving types of VRUs. Grouping according to the transmitting and receiving types has two causal relations: firstly the VRU UE sets its transmitting and receiving type (transmit only, receive only, or transmit and receive) (no matter in software or hardware), and secondly the transmitting and receiving behavior of the VRU UE is determined after being grouped according other parameter conditions (at this time, the VRU UE needs to be informed, and the VRU UE can define its communication behavior by setting in software);
- grouping/pairing of cooperative tasks depending on whether a VRU cooperates with remaining VRUs or not. For example, the RSU receives grouping requests actively made by VRUs that are willing to form a bicycle group from different directions, and pairs these VRUs, or the RSU may select a suitable plurality of VRUs to perform a cooperative calibration when the VRUs are in positions for mutual calibration.

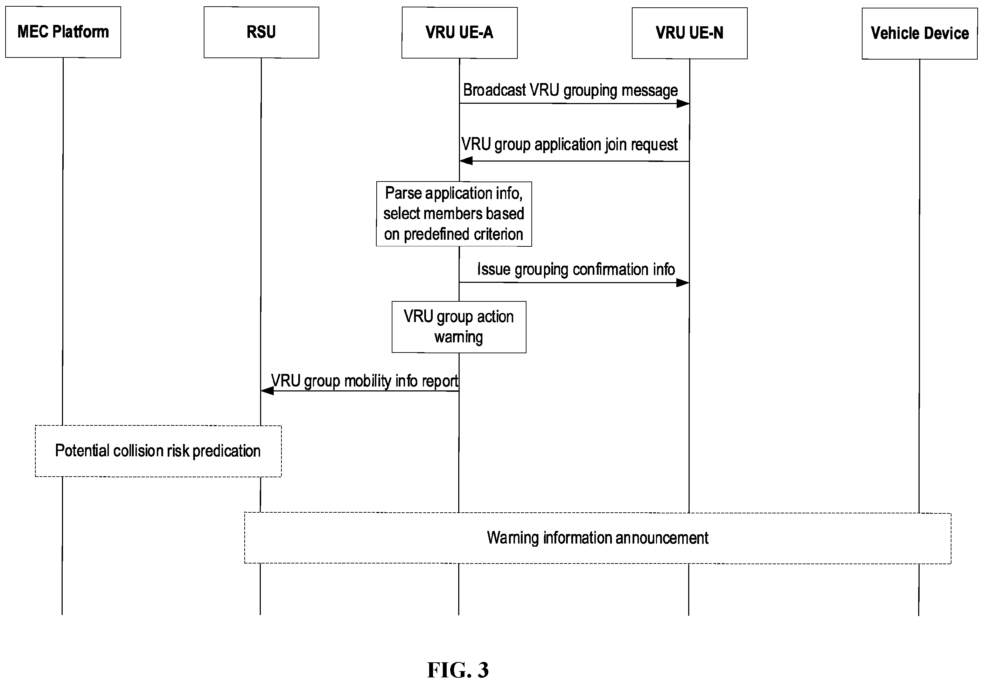

Alternatively, the VRU may be self-managed, i.e., multiple VRU UEs may autonomously perform the group management without intervention from a roadside device. FIG. 3 illustrates an autonomous group management flow for VRU UEs according to an embodiment of the present disclosure.

As shown in FIG. 3, a particular VRU UE (e.g., VRU UE-A) as an initiator may initiate the group management based on its own conditions (battery level, transmit power, etc.). The VRU UE-A actively broadcasts a VRU grouping message to surrounding VRU UEs depending on information such as its current position, moving direction and the like. The VRU UE-A is not limited by the VRU type, such as pedestrian, bicycle, electric bicycle, tricycle or the like. The VRU UE-A's broadcast message for group management may contain its own location, device ID, mobility parameter, whether a connection has been made with an RSU within coverage, and the like.

A VRU UE (such as VRU UE-N) within the broadcast range is willing to participate in the group management, and transmits a VRU group application join request to the initiator VRU UE-A through unicast so as to join the group management mode, wherein the join request can contain information such as position, device ID, mobility parameter, group management validity period and the like of the VRU UE-N.

The VRU UE-A analyzes the received join request, selects VRU UEs that can be managed in a group according to a predefined criterion, and multicasts or unicasts group confirmation information to the VRU UEs in the group. The group confirmation information includes a group ID, a group validity period, an effective area, and the like.

The VRU UE-A becomes an administrator of the VRU group, and enables action warning for the VRU group. The VRU UE-A may actively broadcast or transmit mobility information for the VRU group to the RSU connected thereto, which determines whether there is a potential collision risk between a member in the VRU group and another member or and a vehicle. If there is a risk, the RSU may notify the vehicles and VRU UEs within its coverage range (e.g., via the group administrator VRU UE-A) of the warning information.

When a member of the VRU group leaves or a new VRU joins, they are managed by the VRU UE-A. An update of the VRU group is broadcasted or sent to the RSU by the VRU UE-A.

When the VRU UE-A as the group administrator intends to leave the group, the VRU UE-A can immediately dissolve the VRU group and actively inform the RSU of the corresponding intention. Alternatively, the VRU UE-A transfers the management right of the group to VRU UE-B, for example, and the VRU UE-B multicasts its device ID to members in the group while updating the group ID, and subsequent danger warning alerts and road right acquisition requests are uniformly managed by the VRU UE-B.

Returning to FIG. 2, next in step S4, the RSU or MEC platform transmits the service configuration for the VRU to the VRU UE, e.g., via a PC5 interface. The message for service configuration may also contain an identifier of the VRU UE to identify the VRU UE to send to. The service configuration includes, for example, the type, contents, communication settings and the like of the service determined for the VRU. In particular, the service configuration may also include information on the VRU group to which the VRU belongs, such as a VRU group ID, a group validity period, an effective area, and communication settings shared by the VRU group. Thus, the VRU UE can apply the received service configuration in subsequent service interactions with the RSU.

Descriptions are made above mainly on how a VRU UE interacts with a RSU via the PC5 interface to implement service registration/ customization of the VRU UE with the specific RSU. However, according to an embodiment of the present disclosure, the VRU UE may also interact with a core network unit/application server via a Uu interface to implement service customization of the VRU UE.

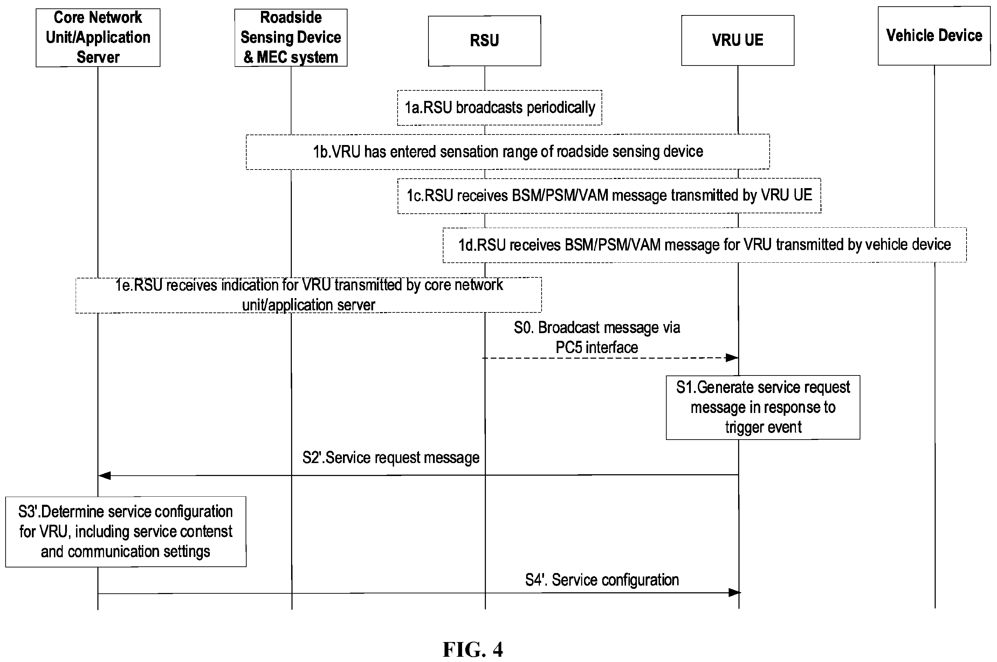

FIG. 4 illustrates an exemplary interaction flow for a VRU UE to access/register a service according to an embodiment of the present disclosure. The flow in FIG. 4 differs from that in FIG. 2 mainly in that the VRU UE interacts with a core network unit or an application server. The following description is made mainly with respect to the difference.

As shown in FIG. 4, after the VRU UE generates a service request message in response to a trigger event (step S1), the VRU UE transmits the generated service request message to a core network unit (e.g., application function AF) or an application server hosting the service via the Uu interface (e.g., the A11 interface in FIG. 1) in step S2'.

In step S3', the core network unit/application server determines a service configuration for the VRU based on service preference information and optionally other information contained in the service request message, wherein the service configuration includes service contents and communication settings customized for the VRU. Optionally, the core network unit/application server may also perform group management on the VRUs and apply service contents and/or communication settings shared by the VRU group to the VRU.

**In** step S4', the core network unit/application server transmits the service configuration for the VRU to the VRU UE, for example, via the Uu interface. The message for service configuration may also contain an identifier of the VRU UE to identify the VRU UE to send to. Thus, the VRU UE can apply the received service configuration in subsequent service interactions with the RSU.

Through the interaction process for the VRU to register the service as described above, the RSU/MEC platform/Internet of Vehicles cloud server or another facility can customize a VRU assistance service according to security requirements of the VRU. The VRU can participate in, for example, a safety assistance service as an executive subject, so that a capability of active avoidance of the VRU after being warned is favorably improved. In addition, the RSU and the VRU UE may negotiate a communication frequency, for example, a setting indication of Discontinuous Reception (DRX) transmission may be provided to enable power saving of the VRU UE. According to some embodiments of the present disclosure, a mode of managing VRUs in a group is provided to improve the efficiency of warning alert on the VRUs.

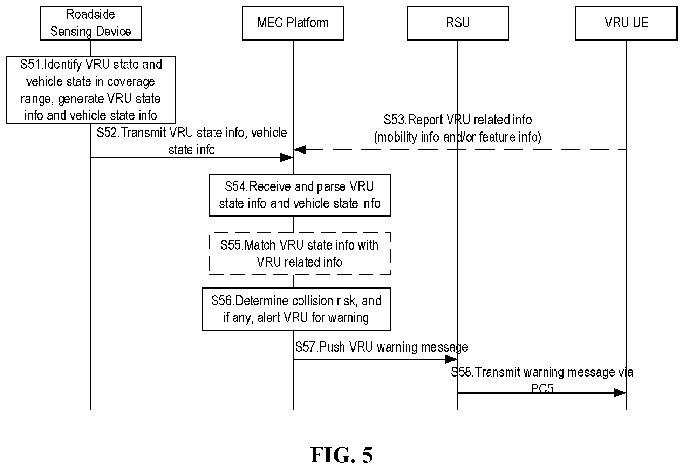

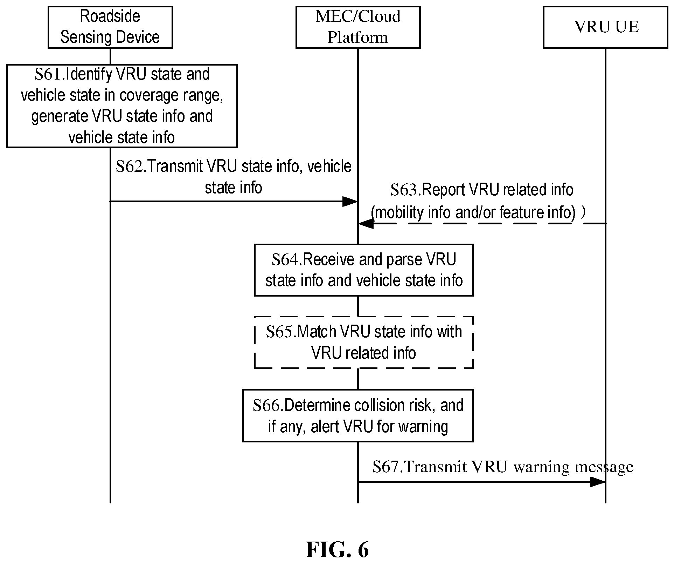

An example of a service flow provided for the VRU is described below with reference to FIGs. 5 and 6, taking a safety assistance service (e.g., collision avoidance warning) as an example. It should be noted that embodiments of the present disclosure are not limited to the collision avoidance warning service shown in FIGs. 5 and 6, but may be applicable to another type of service by modification. The processes described in these figures may be as a continuation of the interaction flow in FIG. 2 or FIG. 4, however, some of the steps may also be performed simultaneously with or before the interaction flow in FIG. 2 or FIG. 4.

FIG. 5 illustrates a security assistance service flow based on the PC5 interface according to an embodiment of the present disclosure. In this example, the VRU UE may support communications based on the PC5 interface.

As shown in the figure, when a road side sensing device monitors that a moving object enters its sensation area, it can identify the type of the object, for example, a VRU or a vehicle, and generate corresponding state information, such as VRU state information or vehicle state information, including mobility information such as location, speed, moving direction and the like of the VRU or vehicle, respectively, according to the monitoring result in S51.

For the roadside sensing device, it has a complete sensing system usually formed by a plurality of different types of sensors on a tower pole, and additionally has a sensed data processing function that enables identification of objects such as VRUs, vehicles and roads (including marks, shoulders, isolation strips, construction road sections on the roads and green plants around the roads) in the sensation range, and for moving objects such as the VRUs and the vehicles, mobility information such as trajectories (historical trajectories, trajectory predictions or the like) and speeds (generally measured by radars) can be generated, and can be transmitted to the MEC/Internet of Vehicles cloud platform for further processing and analysis. For a single sensor, it usually only has a capability of collecting and transmitting a specific kind of sensed information, such as image imaging, lidar point cloud data collection or radar data collection, but some advanced sensing devices (such as Sony IMX 500) may have a certain image recognition function. No matter in what data form the output is, the sensing device is unlikely to directly generate final road warning information, and further processing of an associated computing system is required. In addition, a VRU protection warning area can be set for the RSU and the road side sensing device.

In step S52, the roadside sensing device pushes the generated VRU state information and vehicle state information to the MEC platform or Internet of Vehicles cloud platform, and the MEC platform or Internet of Vehicles cloud platform receives and parses the VRU state information and the vehicle state information in step S54, for running an algorithm to determine whether there is a collision risk between the VRU and the vehicle.

Optionally, in step S53, the VRU UE may report information related to itself, including but not limited to mobility information such as its location, speed and moving direction, or feature information of the VRU such as type of the VRU, clothing color and type of the manipulated device, etc., for example, via the PC5 interface.

Here, the purpose of reporting the related information by the VRU is to: 1) facilitate forming a mapping relationship between the VRU UE available to the RSU at the communication layer and the VRU UE identified in the sensing device (i.e., step S55 to be described later); 2) for the VRU identified by the sensing device, increase a means for mutual calibration, including calibrating the information of the VRU identified by sensation with the information data reported by the VRU UE, or the other way around, wherein the calibration mode is specific to implementation, for example, a reference is decided according to confidence levels of the two pieces of data; 3) for some VRUs that are not identified by the sensing device (not identified at all or with a low confidence), take the information reported by the VRU UE as supplement, considering misdetection, identification error, shielding of the sensor by an obstacle, and the like of the sensing device.

It should be noted that step S53 does not necessarily occur in a sequence behind steps S51, S52 and S54, and the VRU UE may transmit the VRU related information multiple times, for example, continuously reporting its real-time location. If the VRU UE has accessed the RSU, for example, through the flow in FIG. 2 or FIG. 4 before step S53, its transmission and reception may be performed according to the negotiated communication settings; instead, if the VRU UE has not accessed the RSU at this time (e.g., the flow in FIG. 2 or FIG. 4 has not been performed), then the execution of step S53 is preferable for the RSU to establish a communication with the VRU UE.

Also optionally, in step S55, the MEC or Internet of Vehicles cloud platform may match the VRU related information reported by the VRU UE with the VRU state information identified by the roadside sensing device. The matching process may comprise, for example: matching mobility-related data (such as parameters of position, speed, direction and the like) of the two, and if within a certain threshold range, they are considered to be matched; the user inputs his/her own partial features (features that can be recognized by the roadside sensing device, such as clothing color, type of the VRU-manipulated device or the like) at the application layer to assist the matching decision. A result of the matching is that the VRU state information is associated with its VRU (or VRU UE). The MEC or Internet of Vehicles cloud platform may also utilize such information to calibrate or supplement the VRU state information.

Next, in step S56, the MEC or the Internet of Vehicles cloud platform determines whether there is a collision or scratch risk between the VRU and the vehicle based on the VRU state information and the vehicle state information. For example, the MEC or Internet of Vehicles cloud platform analyzes the mobility information of the vehicle and the VRU, such as position, speed, direction and other information of the VRU and a relative driving position of the vehicle, and determines whether a collision risk exists or not according to the road condition. For example, whether the trajectory of the VRU and the trajectory of the vehicle coincide (or more broadly, whether the trajectories are close) may be predicted to derive an expected time to collision.

If it is determined that there is a collision risk, the MEC or Internet of Vehicles cloud platform generates a warning alert message. The generation of the warning message is completely determined by the algorithm deployed on the MEC platform. If the VRU UE has customized the warning service in advance (e.g., through the process described in FIG. 2 or FIG. 4), the algorithm may generate the warning message according to the warning trigger condition and in the warning alert mode desired by the VRU. In step S57, the MEC or Internet of Vehicles cloud platform pushes the warning message to the RSU, and then the RSU may transmit the warning message to the VRU UE via the PC5 interface in step S58 to remind the VRU to pay attention to the vehicle. In addition, the RSU may also transmit the warning message to the corresponding vehicle, for example, via the PC5 interface, to alert the vehicle for avoidance.

FIG. 6 illustrates a security assistance service flow based on a Uu interface according to an embodiment of the present disclosure. The process may begin at step S61 in which a VRU or a vehicle enters a sensation area of a roadside sensing device, and the roadside sensing device identifies the type, location, speed, direction and other information of the VRU and the vehicle within the sensation area, and generates VRU state information and vehicle state information.

In step S62, the roadside sensing device pushes the generated VRU state message and vehicle state information to the MEC or Internet of Vehicles cloud platform, and in step S64, the MEC or Internet of Vehicles cloud platform may receive and parse the VRU state information and the vehicle state information from the roadside sensing device. It should be noted that the MEC or Internet of Vehicles cloud platform herein may communicate with the VRU UE via the Uu interface, and there are two cases depending on whether the core network is deployed with an associated application function/application server:
1) if the core network is deployed with the associated application function entity, the core network may provide, for example, UE device ID verification, location service (including location updating that may be provided by a Location Management Function (LMF), and positioning based on the 3GPP technology, etc.), and once the VRU UE is powered on and accesses the network via the Uu interface, the core network may instruct, in real time, nearby RSU, MEC platform or the like to perform security monitoring on the VRU UE according to the location of the VRU UE and coverage range information of the RSU provided by the related application entity;
2) if the core network is not deployed with the associated application function entity, the VRU UE is required to communicate with the MEC/Internet of Vehicles cloud platform over a data plane, and the MEC/ Internet of Vehicles cloud platform will perform the matching.

Optionally, in step S63, the VRU UE may report information related to itself, for example, via the PC5 interface, including but not limited to: mobility information such as its location, speed and moving direction, or feature information of the VRU such as type of the VRU, clothing color, type of the manipulated device, or the like. Further, in optional step S65, the MEC or Internet of Vehicles cloud platform matches the VRU related information reported by the VRU UE with the VRU state information identified by the roadside sensing device, and the detailed matching process is similar to step S55 and is not described herein again.

In step S66, the MEC or Internet of Vehicles cloud platform determines whether there is a collision or scratch risk between the VRU and the vehicle based on the VRU state information and the vehicle state information. If it is determined that there is a collision risk, the MEC or Internet of Vehicles cloud platform generates a warning alert message. If the VRU UE has customized the warning service in advance (e.g., by means of the process described in FIG. 2 or FIG. 4), the algorithm may generate the warning message according to the warning trigger condition and in the warning alert mode desired by the VRU.

In step S67, the MEC or Internet of Vehicles cloud platform transmits the warning message to the VRU UE via the Uu interface to remind the VRU to pay attention to the vehicle. In addition, the MEC or Internet of Vehicles cloud platform may also transmit the warning message to the corresponding vehicle, for example, via the Uu interface, to alert the vehicle for avoidance.

Typically, the warning message is transmitted by the RSU to the vehicle to remind the vehicle of potential VRUs that may appear on its route. If the roadside sensing system is invaded by a hacker and maliciously broadcasts a warning message of non-existent VRU risk to vehicles in a specific area through the RSU, then when a vehicle receives such message, normal driving strategy or automatic driving decision of the driver may be interfered, which may produce additional road use risk. Therefore, in order to mitigate impacts on normal traffic and VRU protection in such scenarios, the following strategies can be considered:
1) the vehicle without a blind spot area receives the warning message about a VRU from the RSU, but its sensor has not detected a potential risk. If it turns out that the VRU warning message of the RSU is a false positive, the vehicle raises a priority of its own sensation and lowers the V2X warning priority in corresponding/similar scenes.
2) The vehicle counts results of comparison between the VRU warnings received in non-blind spot areas and sensations of its sensor, and the algorithm is set to count continuously different sensed results and compare differences with a real scene, and after the result exceed a set threshold value, handshaking is actively conducted with an RSU to confirm confidence of the state information and V2X warning information.

Electronic devices and communication methods according to embodiments of the present disclosure are described below.

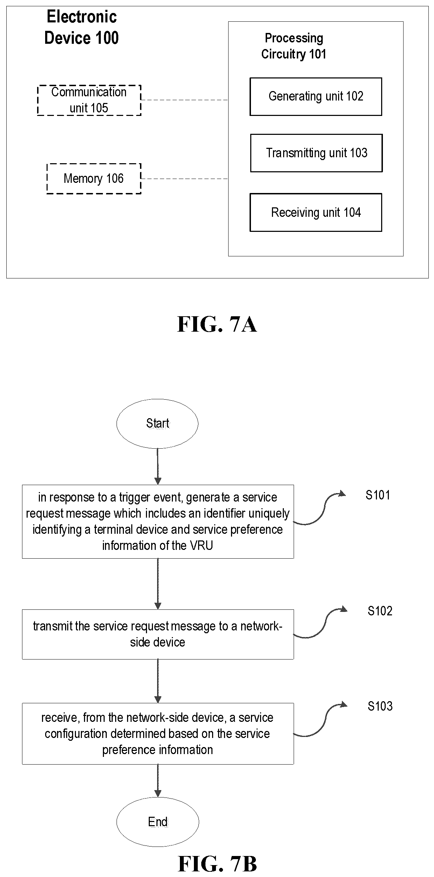

FIG. 7A is a block diagram illustrating an electronic device 100 for a VRU according to an embodiment of the present disclosure, and FIG. 7B illustrates a flowchart of a communication method that can be performed by the electronic device 100. The electronic device 100 can communicate with an electronic device 200 as described below.

As shown in FIG. 7A, the electronic device 100 comprises processing circuitry 101 which includes at least a generating unit 102, a transmitting unit 103, and a receiving unit 104. The processing circuitry 101 may be configured to perform the communication method as shown in FIG. 7B. The processing circuitry 101 may refer to various implementations of digital, analog, or mixed-signal (a combination of analog signal and digital signal) circuitry for performing functions in a computing system. The processing circuitry may include, for example, circuitry such as an integrated circuit (IC) or an application specific integrated circuit (ASIC), portions or circuits of an individual processor core, an entire processor core, an individual processor, a programmable hardware device such as a field programmable gate array (FPGA), and/or a system including multiple processors.

The generating unit 102 of the processing circuitry 101 is configured to generate a service request message in response to a trigger event (i.e., to perform step S101 in FIG. 7B). The service request message includes an identifier uniquely identifying a terminal device and service preference information of the VRU. The event that triggers the generation of the service request message includes, for example, receiving a broadcast message from an RSU, or detecting the VRU or its terminal device is in a predefined state.

The transmitting unit 103 is configured to transmit the service request message generated by the generating unit 102 to a network-side device, such as an RSU, a MEC platform, a core network unit or an application server (i.e., to perform step S102 in FIG. 7B). The transmitting unit 103 may transmit the service request message via a PC5 interface or Uu interface.

The receiving unit 104 is configured to receive, from the network-side device, a service configuration determined based on the service preference information (i.e., to perform step S103 in FIG. 7B). The service configuration includes, for example, the type, contents, communication settings and the like of the service determined for the VRU, and can be transmitted via, for example, the PC5 interface or Uu interface. Preferably, the service configuration can include information about a VRU group to which the VRU belongs.

The electronic device 100 may further comprise a communication unit 105. The communication unit 105 can be configured to perform communications under control of the processing circuitry 101. In one example, the communication unit 105 can be implemented as a transceiver including communication components such as an antenna array and/or a radio frequency link. The communication unit 105 is depicted with a dashed line since it may also be located outside the electronic device 100.

The electronic device 100 may further include a memory 106. The memory 106 may store various data and instructions, such as programs and data for operation of the electronic device 100, various data generated by the processing circuitry 101, and the like. The memory 106 is depicted with a dashed line since it may also be located within the processing circuitry 101 or outside the electronic device 100. The memory 106 may be a volatile memory and/or a non-volatile memory. For example, the memory may include, but is not limited to, Random Access Memory (RAM), Dynamic Random Access Memory (DRAM), Static Random Access Memory (SRAM), Read Only Memory (ROM), or flash memory.

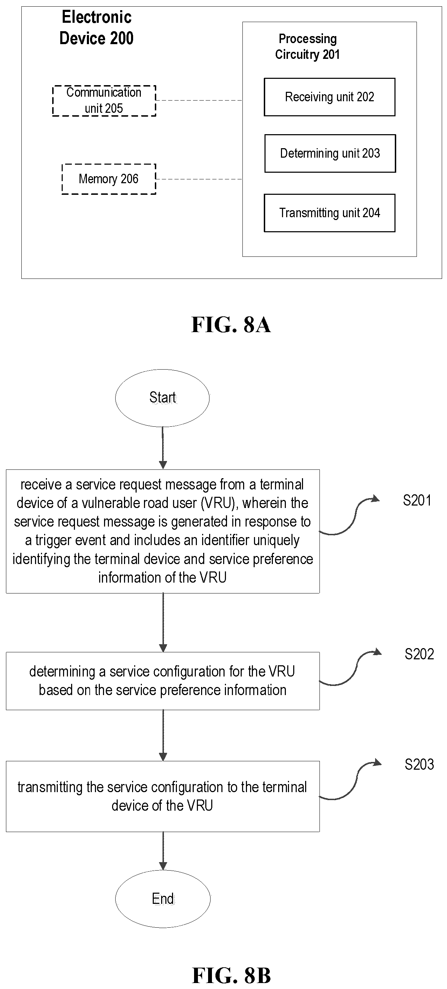

FIG. 8A is a block diagram illustrating an electronic device 200 for a network-side device according to an embodiment of the present disclosure, and FIG. 8B illustrates a flowchart of a communication method that can be performed by the electronic device 200. The electronic device 200 can communicate with the electronic device 100 as described above.

As shown in FIG. 8A, the electronic device 200 comprises processing circuitry 201, which includes at least a receiving unit 202, a determining unit 203 and a transmitting unit 204. The processing circuitry 201 may be configured to perform the communication method as shown in FIG. 8B. The processing circuitry 201 may refer to various implementations of digital, analog, or mixed-signal (a combination of analog signal and digital signal) circuitry for performing functions in a computing system. The processing circuitry may include, for example, circuitry such as an integrated circuit (IC) or an application specific integrated circuit (ASIC), portions or circuits of an individual processor core, an entire processor core, an individual processor, a programmable hardware device such as a field programmable gate array (FPGA), and/or a system including multiple processors.

The receiving unit 202 of the processing circuitry 201 is configured to receive a service request message from a VRU UE (i.e., to perform step S201 in FIG. 8B), wherein the service request message is generated by the VRU UE in response to a trigger event, and includes an identifier uniquely identifying the VRU UE and service preference information.

The determining unit 203 is configured to determine a service configuration for the VRU based on the service preference information in the service request message (i.e., to perform step S202 in FIG. 8B). The service configuration includes a type, contents and communication settings of the service determined for the VRU, and preferably, can include information on a VRU group to which the VRU belongs, wherein VRUs in the VRU group have substantially the same or similar communication setting.

The transmitting unit 204 is configured to transmit the service configuration determined by the determining unit 203 to the VRU UE, (i.e., to perform step S203 in FIG. 8B). The transmitting unit 204 can implement the transmission of the service configuration via, for example, a PC5 interface or Uu interface.

The electronic device 200 may also include a communication unit 205. The communication unit 205 can be configured to perform communications under control of the processing circuitry 201. In one example, the communication unit 205 can be implemented as transceiver including communication components such as an antenna array and/or a radio frequency link. The communication unit 205 is depicted with a dashed line since it may also be located outside the electronic device 200.

The electronic device 200 may also include a memory 206. The memory 206 may store various data and instructions, such as programs and data for operation of the electronic device 200, various data generated by the processing circuitry 201, and so forth. The memory 206 is depicted with a dashed line because it may also be located within the processing circuitry 201 or outside the electronic device 200. The memory 206 may be a volatile memory and/or a non-volatile memory. For example, the memory may include, but is not limited to, Random Access Memory (RAM), Dynamic Random Access Memory (DRAM), Static Random Access Memory (SRAM), Read Only Memory (ROM), or flash memory.

It should be understood that the units of the electronic devices 100 and 200 described in the above embodiments are only logical modules divided according to the specific functions they implement, and are not used to limit specific implementations. In an actual implementation, the foregoing units may be implemented as individual physical entities, or may also be implemented by a single entity (for example, a processor (CPU or DSP, etc.), an integrated circuit, etc.).

### [Exemplary implementations of the present disclosure]

According to the embodiments of the present disclosure, various implementations for practicing concepts of the present disclosure can be conceived, including but not limited to:
1). An electronic device for a vulnerable road user (VRU), comprising:
   processing circuitry configured to
   in response to a trigger event, generate a service request message which includes an identifier uniquely identifying a terminal device and service preference information of the VRU;
   transmit the service request message to a network-side device; and
   receive, from the network-side device, a service configuration determined based on the service preference information.
2). The electronic device according to 1), wherein the trigger event comprises:
   a broadcast message is received from a road side unit (RSU) via a PC5 interface, the broadcast message including service contents supported by the RSU and corresponding communication settings.
3). The electronic device according to 2), wherein the broadcast message is triggered by at least one of:
   periodicity;
   the RSU receiving, from an associated roadside sensing device, information indicating that the VRU has entered a sensation range of the roadside sensing device;
   the RSU receiving a Basic Safety Message (BSM), Personal Safety Message (PSM) or VRU Awareness Message (VAM) transmitted by the terminal device of the VRU;
   the RSU receiving a BSM, PSM or VSM transmitted by a vehicle device and indicating that the VRU is present in a particular area; and
   the RSU receiving, from a core network unit or an application server, an indication indicating that the VRU has entered a coverage range of the RSU.
4). The electronic device according to 1) or 2), wherein the trigger event includes at least one of:
   the terminal device of the VRU finding that the VRU is in a certain security risk by receiving and analyzing data transmitted by a vehicle device or a road side unit (RSU);
   the terminal device of the VRU receiving, from a core network unit or an application server, information indicating that the VRU is approaching a high-risk area;
   the terminal device of the VRU finding that the VRU is entering a high-risk area based on location information; and
   the terminal device of the VRU having a battery level below a threshold.
5). The electronic device according to 1), wherein the service preference information indicates at least one of:
   a type of a service desired by the VRU;
   a communication pattern for the service;
   a mode for the VRU to receive a warning alert; and
   a trigger condition for the VRU to receive a warning alert.
6). The electronic device according to 5), wherein the type of the service includes at least one of
   a service for collision avoidance/road risk warning;
   a service for collaborative traffic join and lane change;
   a service for positioning assistance; and
   a service for message relay or collective forwarding.
7). The electronic device according to 1), wherein the service request message further comprises at least one of
   a type of the VRU;
   a moving capability of the VRU;
   a brake performance of the VRU;
   a positioning capability of the terminal device of the VRU; and
   a navigation route of the terminal device of the VRU.
8). The electronic device according to 1), wherein the service configuration includes a type, contents and communication settings of the service determined for the VRU.
9). The electronic device according to 8), wherein the service configuration further includes information on a VRU group to which the VRU belongs, wherein VRUs in the VRU group have substantially the same communication settings.
10). The electronic device according to 1), wherein the processing circuitry is further configured to:
   receive VRU grouping information broadcast by another VRU;
   send a join request to the another VRU; and
   receive VRU grouping confirmation information from the another VRU.
11). The electronic device according to 1), wherein the processing circuitry is further configured to:
   transmit VRU state information to a road side unit (RSU) via a PC5 interface; and
   receive a warning alert from the RSU via the PC5 interface.
12). An electronic device for a network-side device, comprising:
   processing circuitry configured to
   receive a service request message from a terminal device of a vulnerable road user (VRU), wherein the service request message is generated in response to a trigger event and includes an identifier uniquely identifying the terminal device and service preference information of the VRU;
   determine a service configuration for the VRU based on the service preference information; and
   transmit the service configuration to the terminal device of the VRU.
13). The electronic device according to 12), wherein the network-side device comprises a road side unit (RSU), a multi-access edge computing (MEC) platform, a core network unit, or an application server.
14). The electronic device according to 12), wherein the processing circuitry is further configured to transmit, via a road side unit (RSU), a broadcast message including service contents supported by the RSU and corresponding communication settings as the trigger event, in response to at least one of:
   periodicity;
   the RSU receiving, from an associated roadside sensing device, information indicating that the VRU has entered a sensation range of the roadside sensing device;
   the RSU receiving a Basic Safety Message (BSM), Personal Safety Message (PSM) or VRU Awareness Message (VAM) transmitted by the terminal device of the VRU;
   the RSU receiving a BSM, PSM or VSM transmitted by a vehicle device and indicating that the VRU is present in a particular area; and
   the RSU receiving, from a core network unit or an application server, an indication indicating that the VRU has entered a coverage range of the RSU.
15). The electronic device according to 12), wherein the service preference information indicates at least one of:
   a type of a service desired by the VRU;
   a communication pattern for the service;
   a mode for the VRU to receive a warning alert; and
   a trigger condition for the VRU to receive a warning alert.
16). The electronic device according to 15), wherein the type of the service includes at least one of
   a service for collision avoidance or road risk warning;
   a service for collaborative traffic join and lane change;
   a service for positioning assistance; and
   a service for message relay or collective forwarding.
17). The electronic device according to 12), wherein the service configuration includes a type, contents and communication settings of the service determined for the VRU.
18). The electronic device according to 12), wherein the processing circuitry is further configured to:
   update communication settings of the service for the VRU based on a risk level of an environment in which the VRU is located; and
   transmit the updated communication settings to the terminal device of the VRU.
19). The electronic device according to 12), wherein the processing circuitry is further configured to:
   determine a VRU group to which the VRU belongs according to a predetermined group management criteria, wherein VRUs in the VRU group have substantially the same communication settings; and
   include information of the VRU group in the service configuration for transmission to the terminal device of the VRU.
20). The electronic device according to 12), wherein the processing circuitry is further configured to:
   receive VRU state information of the VRU and state information of a vehicle from a roadside sensing device;
   determine whether there is a collision risk between the VRU and the vehicle based on the VRU state information and the state information of the vehicle; and
   transmit a warning alert to the VRU in response to determining that there is a collision risk.
21). The electronic device according to 20), wherein the processing circuitry is further configured to:
   receive VRU related information from the terminal device of the VRU; and
   calibrate the VRU state information by matching the VRU related information received from the terminal device of the VRU with the VRU state information received from the roadside sensing device, and associate the VRU related information with the VRU.
22). An electronic device for a vehicle, comprising:
   processing circuitry configured to
   receive a V2X warning for a vulnerable road user (VRU) from a road side unit (RSU);
   compare a difference between the V2X warning and a real-world scene; and
   adjust a priority of the V2X warning based on a result of the comparison.
23). The electronic device according to 22), wherein the processing circuitry is further configured to:
   confirm a confidence of the V2X warning and/or the state information of the vehicle with the RSU, in a case where the difference between the V2X warning and the real-world scene exceeds a predetermine threshold.
24). A communication method, comprising:
   in response to a trigger event, generating a service request message which includes an identifier uniquely identifying a terminal device and service preference information of the VRU;
   transmitting the service request message to a network-side device; and
   receiving, from the network-side device, a service configuration determined based on the service preference information.
25). A communication method, comprising:
   receiving a service request message from a terminal device of a vulnerable road user (VRU), wherein the service request message is generated in response to a trigger event and includes an identifier uniquely identifying the terminal device and service preference information of the VRU;
   determining a service configuration for the VRU based on the service preference information; and
   transmitting the service configuration to the terminal device of the VRU.
26). A non-transitory computer-readable storage medium storing executable instructions which, when executed, implement the communication method of 24) or 25).

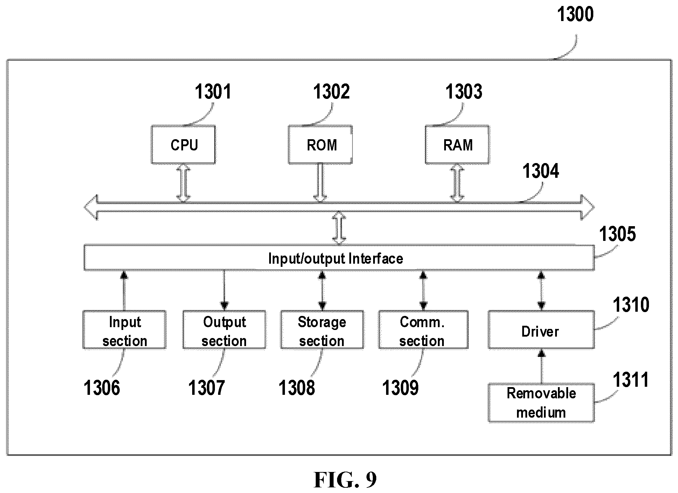

FIG. 9 illustrates an example block diagram of a computer that can be implemented as a terminal device or a control device according to the embodiments of the present disclosure.

In FIG. 9, a central processing unit (CPU) 1301 performs various processing based on programs stored in a Read-Only Memory (ROM) 1302 or programs loaded into a Random Access Memory (RAM) 1303 from a storage section 1308. Data required by CPU 1301 in performing various processing, and the like, is also stored in RAM 1303 as needed.

CPU 1301, ROM 1302, and RAM 1303 are interconnected via a bus 1304. An input/output interface 1305 is also connected to bus 1304.

The following components are connected to the input/output interface 1305: an input section 1306 including a keyboard, a mouse and so forth; an output section 1307 including a display such as a cathode ray tube (CRT), a liquid crystal display (LCD) or the like, and a speaker, and so forth; a storage section 1308 including a hard disk and the like; and a communication section 1309 including a network interface card such as a LAN card or a modem, or the like. The communication section 1309 performs communication processing via networks such as the Internet.

As needed, a driver 1310 is also connected to the input/output interface 1305. A removable medium 1311, such as a magnetic disk, optical disk, magneto-optical disk, semiconductor memory, etc., is mounted on the driver 1310 as needed, enabling computer programs read from the removable medium 1311 to be installed in the storage section 1308 as needed.

When the above series of processes are implemented by software, the programs constituting the software are installed from a network such as the Internet or a storage medium such as the removable medium 1311.

It should be understood by those skilled in the art that such a storage medium is not limited to the removable medium 1311 shown in FIG. 9, which stores a program and is distributed separately from a device to provide the programs to a user. Examples of the removable medium 1311 include magnetic disks (including floppy disks (registered trademark)), optical disks (including compact disc read-only memory (CD-ROM) and digital versatile discs (DVD)), magneto-optical disks (including mini-discs (MD) (registered trademark)), and semiconductor memory. Alternatively, the storage medium can be the ROM 1302, hard disk included in the storage section 1308, and so forth, in which programs are stored and distributed to users along with the device containing them.

### [Application examples of the present disclosure]

The technology of the present disclosure can be applied to various products.

For example, the electronic device 100 or 200 according to the embodiments of the present disclosure can be implemented as a variety of base stations or included in a variety of base stations, or can be implemented as a variety of user devices or included in a variety of user devices.

The communication methods according to the embodiments of the present disclosure may be implemented by various base stations or user devices; the methods and operations according to the embodiments of the present disclosure may be embodied as computer-executable instructions, stored in a non-transitory computer-readable storage medium, and can be performed by various base stations or user devices to implement one or more of the above-mentioned functions.

The technology according to the embodiments of the present disclosure can be made into various computer program products, which can be used in various base stations or user devices to implement one or more of the above-mentioned functions.

The base station mentioned in the present disclosure can be implemented as any type of base station, preferably, such as macro gNB or ng-eNB defined in the 3GPP 5G NR standard. The gNB may be a gNB that covers a cell smaller than a macro cell, such as a pico gNB, a micro gNB, and a home (femto) gNB. Instead, the base station may be implemented as any other type of base station such as a NodeB, an eNodeB and a base transceiver station (BTS). The base station may include a main body configured to control wireless communication, and one or more remote radio heads (RRH), a wirelesss relay, a drone control tower, a control node in an automated factory or the like disposed in a different place from the main body.

The user device may be implemented as a mobile terminal such as a smartphone, a tablet personal computer (PC), a notebook PC, a portable game terminal, a portable/dongle type mobile router, and a digital camera apparatus, or an on-vehicle terminal such as a car navigation device. The user device may also be implemented as a terminal (that is also referred to as a machine type communication (MTC) terminal) that performs machine-to-machine (M2M) communication, a drone, a sensor or actuator in an automated factory or the like. Furthermore, the user device may be a wireless communication module (such as an integrated circuit module including a single die) mounted on each of the above terminals.

Examples of the base station and the user device in which the technology of the present disclosure can be applied will be described briefly below.

### First application example of base station

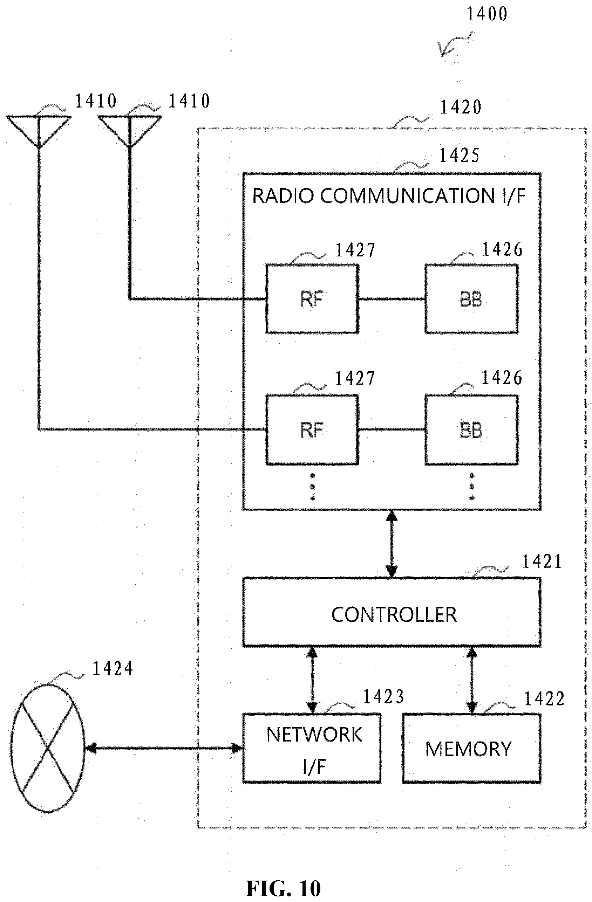

FIG. 10 is a block diagram showing a first example of a schematic configuration of a base station to which the technology of the present disclosure can be applied. In FIG. 10, the base station is implemented as gNB 1400. The gNB 1400 includes a plurality of antennas 1410 and a base station device 1420. The base station device 1420 and each antenna 1410 may be connected to each other via an RF cable. In an implementation, the gNB 1400 (or the base station device 1420) herein may correspond to the above-mentioned electronic device 200.

The antennas 1410 includes multiple antenna elements, such as multiple antenna arrays for large-scale MIMO. The antennas 1410, for example, can be arranged into a matrix of antenna arrays, and are used by the base station device 1420 to transmit and receive wireless signals. For example, multiple antennas 1410 may be compatible with multiple frequency bands used by gNB 1400.

The base station device 1420 includes a controller 1421, a memory 1422, a network interface 1423, and a radio communication interface 1425.

The controller 1421 may be, for example, a CPU or a DSP, and operates various functions of the base station device 1420 at a higher layer. For example, the controller 1421 may include the processing circuitry 201 as described above, perform the communication method described in FIG. 8B, or control various components of the electronic device 200. For example, the controller 1421 generates data packets based on data in signals processed by the radio communication interface 1425, and passes the generated packets via the network interface 1423. The controller 1421 may bundle data from multiple baseband processors to generate bundled packets, and pass the generated bundled packets. The controller 1421 may have logical functions that perform controls such as radio resource control, radio bearer control, mobility management, admission control, and scheduling. The controls can be performed in conjunction with a nearby gNB or core network node. The memory 1422 includes a RAM and a ROM, and stores a program executed by the controller 1421 and various types of control data such as a terminal list, transmission power data, and scheduling data.

The network interface 1423 is a communication interface for connecting the base station device 1420 to the core network 1424. The controller 1421 may communicate with a core network node or another gNB via the network interface 1423. In this case, the gNB 1400 and the core network node or other gNBs may be connected to each other through a logical interface such as an S1 interface and an X2 interface. The network interface 1423 may also be a wired communication interface or a radio communication interface for a wireless backhaul line. If the network interface 1423 is a radio communication interface, compared with the frequency band used by the radio communication interface 1425, the network interface 1423 can use a higher frequency band for wireless communication.

The radio communication interface 1425 supports any cellular communication scheme such as 5G NR, and provides a wireless connection to a terminal located in a cell of the gNB 1400 via an antenna 1410. The radio communication interface 1425 may generally include, for example, a baseband (BB) processor 1426 and an RF circuit 1427. The BB processor 1426 may perform, for example, encoding/decoding, modulation/demodulation, and multiplexing/demultiplexing, and execute various types of signal processing in layers such as the physical layer, the MAC layer, the RLC layer, and the PDCP layer. As an alternative of the controller 1421, the BB processor 1426 may have a part or all of the above-mentioned logical functions. The BB processor 1426 may be a memory storing a communication control program, or a module including a processor and related circuits configured to execute the program. Updating the program can change the function of the BB processor 1426. The module may be a card or a blade inserted into a slot of the base station device 1420. Alternatively, the module may be a chip mounted on a card or a blade. Meanwhile, the RF circuit 1427 may include, for example, a mixer, a filter, and an amplifier, and transmits and receives a wireless signal via the antenna 1410. Although FIG. 10 illustrates an example in which one RF circuit 1427 is connected to one antenna 1410, the present disclosure is not limited to this illustration, but one RF circuit 1427 may be connected to multiple antennas 1410 at the same time.

As shown in FIG. 10, the radio communication interface 1425 may include a plurality of BB processors 1426. For example, the plurality of BB processors 1426 may be compatible with multiple frequency bands used by gNB 1400. As shown in FIG. 10, the radio communication interface 1425 may include a plurality of RF circuits 1427. For example, the plurality of RF circuits 1427 may be compatible with multiple antenna elements. Although FIG. 10 shows an example in which the radio communication interface 1425 includes a plurality of BB processors 1426 and a plurality of RF circuits 1427, the radio communication interface 1425 may also include a single BB processor 1426 or a single RF circuit 1427.

In the gNB 1400 illustrated in FIG. 10, one or more of the units included in the processing circuitry 201 may be implemented in the radio communication interface 1425. Alternatively, at least a part of these components may be implemented in the controller 1421. As an example, the gNB 1400 includes a part (for example, the BB processor 1426) or the entire of the radio communication interface 1425 and/or a module including the controller 1421, and the one or more components may be implemented in the module. In this case, the module may store a program (in other words, a program causing the processor to execute operations of the one or more components) causing the processor to function as the one or more components, and execute the program. As another example, a program causing the processor to function as the one or more components may be installed in the gNB 1400, and the radio communication interface 1425 (for example, the BB processor 1426) and/or the controller 1421 may execute the program. As described above, as a device including the one or more components, the gNB 1400, the base station device 1420 or the module may be provided. In addition, a readable medium in which the program is recorded may be provided.

### Second application example of base station

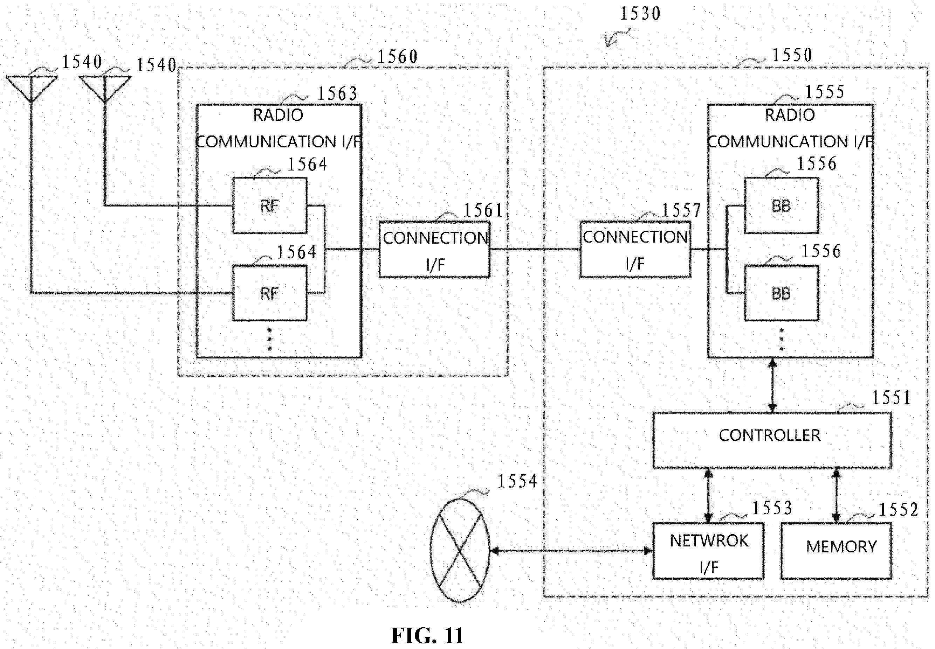

FIG. 11 is a block diagram showing a second example of a schematic configuration of a base station to which the technology of the present disclosure can be applied. In FIG. 11, the base station is shown as gNB 1530. The gNB 1530 includes multiple antennas 1540, base station equipment 1550, and RRH 1560. The RRH 1560 and each antenna 1540 may be connected to each other via an RF cable. The base station equipment 1550 and the RRH 1560 may be connected to each other via a high-speed line such as a fiber optic cable. In an implementation, the gNB 1530 (or the base station device 1550) herein may correspond to the above-mentioned electronic device 200.

The antennas 1540 includes multiple antenna elements, such as multiple antenna arrays for large-scale MIMO. The antennas 1540, for example, can be arranged into a matrix of antenna arrays, and are used by the base station device 1550 to transmit and receive wireless signals. For example, multiple antennas 1540 may be compatible with multiple frequency bands used by gNB 1530.

The base station device 1550 includes a controller 1551, a memory 1552, a network interface 1553, a radio communication interface 1555, and a connection interface 1557. The controller 1551, the memory 1552, and the network interface 1553 are the same as the controller 1421, the memory 1422, and the network interface 1423 described with reference to FIG. 10.

The radio communication interface 1555 supports any cellular communication scheme such as 5G NR, and provides wireless communication to a terminal located in a sector corresponding to the RRH 1560 via the RRH 1560 and the antenna 1540. The radio communication interface 1555 may typically include, for example, a BB processor 1556. The BB processor 1556 is the same as the BB processor 1426 described with reference to FIG. 10 except that the BB processor 1556 is connected to the RF circuit 1564 of the RRH 1560 via the connection interface 1557. As shown in FIG. 11, the radio communication interface 1555 may include a plurality of BB processors 1556. For example, multiple BB processors 1556 may be compatible with multiple frequency bands used by gNB 1530. Although FIG. 11 shows an example in which the radio communication interface 1555 includes a plurality of BB processors 1556, the radio communication interface 1555 may also include a single BB processor 1556.

The connection interface 1557 is an interface for connecting the base station device 1550 (radio communication interface 1555) to the RRH 1560. The connection interface 1557 may also be a communication module for communication in the above-mentioned high-speed line connecting the base station device 1550 (radio communication interface 1555) to the RRH 1560.

The RRH 1560 includes a connection interface 1561 and a radio communication interface 1563.

The connection interface 1561 is an interface for connecting the RRH 1560 (radio communication interface 1563) to the base station device 1550. The connection interface 1561 may also be a communication module for communication in the above-mentioned high-speed line.

The radio communication interface 1563 transmits and receives wireless signals via the antenna 1540. The radio communication interface 1563 may generally include, for example, an RF circuit 1564. The RF circuit 1564 may include, for example, a mixer, a filter, and an amplifier, and transmits and receives wireless signals via the antenna 1540. Although FIG. 11 illustrates an example in which one RF circuit 1564 is connected to one antenna 1540, the present disclosure is not limited to this illustration, but one RF circuit 1564 may be connected to multiple antennas 1540 at the same time.

As shown in FIG. 11, the radio communication interface 1563 may include a plurality of RF circuits 1564. For example, the plurality of RF circuits 1564 may support multiple antenna elements. Although FIG. 11 shows an example in which the radio communication interface 1563 includes a plurality of RF circuits 1564, the radio communication interface 1563 may include a single RF circuit 1564.

In the gNB 1500 shown in FIG. 11, one or more units included in the processing circuitry 201 may be implemented in the radio communication interface 1525. Alternatively, at least a part of these components may be implemented in the controller 1521. For example, the gNB 1500 includes a part (for example, the BB processor 1526) or the whole of the radio communication interface 1525, and/or a module including the controller 1521, and one or more components may be implemented in the module. In this case, the module may store a program for allowing the processor to function as one or more components (in other words, a program for allowing the processor to perform operations of one or more components), and may execute the program. As another example, a program for allowing the processor to function as one or more components may be installed in the gNB 1500, and the radio communication interface 1525 (for example, the BB processor 1526) and/or the controller 1521 may execute the program. As described above, as a device including one or more components, the gNB 1500, the base station device 1520, or a module may be provided, and a program for allowing the processor to function as one or more components may be provided. In addition, a readable medium in which the program is recorded may be provided.

### First application example of user equipment

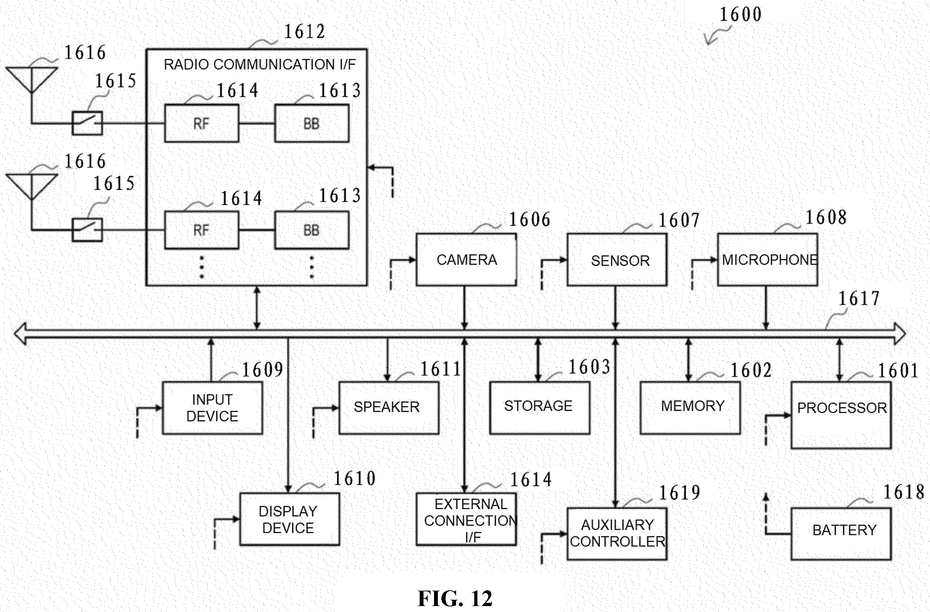

FIG. 12 is a block diagram showing an example of a schematic configuration of a smartphone 1600 to which the technology of the present disclosure can be applied. In an example, the smart phone 1600 may be implemented as the electronic device 100 or 200.

The smartphone 1600 includes a processor 1601, a memory 1602, a storage device 1603, an external connection interface 1604, a camera device 1606, a sensor 1607, a microphone 1608, an input device 1609, a display device 1610, a speaker 1611, a radio communication interface 1612, one or more antenna switches 1615, one or more antennas 1616, a bus 1617, a battery 1618, and an auxiliary controller 1619.

The processor 1601 may be, for example, a CPU or a system on chip (SoC), and controls functions of an application layer and another layer of the smartphone 1600. The processor 1601 may include or serve as the processing circuitry 101 or 201 described with reference to the figures. The memory 1602 includes a RAM and a ROM, and stores data and programs executed by the processor 1601. The storage device 1603 may include a storage medium such as a semiconductor memory and a hard disk. The external connection interface 1604 is an interface for connecting external devices such as a memory card and a universal serial bus (USB) device to the smartphone 1600.

The camera device 1606 includes an image sensor such as a charge-coupled device (CCD) and a complementary metal oxide semiconductor (CMOS), and generates a captured image. The sensor 1607 may include a set of sensors such as a measurement sensor, a gyroscope sensor, a geomagnetic sensor, and an acceleration sensor. The microphone 1608 converts a sound input to the smartphone 1600 into an audio signal. The input device 1609 includes, for example, a touch sensor, a keypad, a keyboard, a button, or a switch configured to detect a touch on the screen of the display device 1610, and receives an operation or information input from a user. The display device 1610 includes a screen such as a liquid crystal display (LCD) and an organic light emitting diode (OLED) display, and displays an output image of the smartphone 1600. The speaker 1611 converts an audio signal output from the smartphone 1600 into a sound.

The radio communication interface 1612 supports any cellular communication scheme such as 4G LTE, 5G NR or the like, and performs wireless communication. The radio communication interface 1612 may generally include, for example, a BB processor 1613 and an RF circuit 1614. The BB processor 1613 may perform, for example, encoding/decoding, modulation/demodulation, and multiplexing/demultiplexing, and perform various types of signal processing for wireless communication. Meanwhile, the RF circuit 1614 may include, for example, a mixer, a filter, and an amplifier, and transmits and receives wireless signals via the antenna 1616. The radio communication interface 1612 may be a chip module on which a BB processor 1613 and an RF circuit 1614 are integrated. As shown in FIG. 12, the radio communication interface 1612 may include multiple BB processors 1613 and multiple RF circuits 1614. Although FIG. 12 illustrates an example in which the radio communication interface 1612 includes a plurality of BB processors 1613 and a plurality of RF circuits 1614, the radio communication interface 1612 may also include a single BB processor 1613 or a single RF circuit 1614.

In addition, in addition to the cellular communication scheme, the radio communication interface 1612 may support other types of wireless communication scheme, such as a short-range wireless communication scheme, a near field communication scheme, and a wireless local area network (LAN) scheme. In this case, the radio communication interface 1612 may include a BB processor 1613 and an RF circuit 1614 for each wireless communication scheme.

Each of the antenna switches 1615 switches a connection destination of the antenna 1616 between a plurality of circuits included in the radio communication interface 1612 (for example, circuits for different wireless communication schemes).

The antennas 1616 includes multiple antenna elements, such as multiple antenna arrays for large-scale MIMO. The antennas 1616, for example, can be arranged into a matrix of antenna arrays, and are used by the radio communication interface 1612 to transmit and receive wireless signals. The smart phone 1600 can includes one or more antenna panels (not shown).

In addition, the smartphone 1600 may include an antenna 1616 for each wireless communication scheme. In this case, the antenna switch 1615 may be omitted from the configuration of the smartphone 1600.

The bus 1617 connects the processor 1601, the memory 1602, the storage device 1603, the external connection interface 1604, the camera device 1606, the sensor 1607, the microphone 1608, the input device 1609, the display device 1610, the speaker 1611, the radio communication interface 1612, and the auxiliary controller 1619 to each other. The battery 1618 supplies power to each block of the smartphone 1600 shown in FIG. 12 via a feeder, and the feeder is partially shown as a dotted line in the figure. The auxiliary controller 1619 operates the minimum necessary functions of the smartphone 1600 in the sleep mode, for example.

In the smart phone 1600 shown in FIG. 12, one or more units included in the processing circuitry 101 or 201 may be implemented in the radio communication interface 1612. Alternatively, at least a part of these components may be implemented in the processor 1601 or the auxiliary controller 1619. As an example, the smart phone 1600 includes a part (for example, the BB processor 1613) or the whole of the radio communication interface 1612, and/or a module including the processor 1601 and/or the auxiliary controller 1619, and one or more components may be Implemented in this module. In this case, the module may store a program that allows processing to function as one or more components (in other words, a program for allowing the processor to perform operations of one or more components), and may execute the program. As another example, a program for allowing the processor to function as one or more components may be installed in the smart phone 1600, and the radio communication interface 1612 (for example, the BB processor 1613), the processor 1601, and/or the auxiliary The controller 1619 can execute this program. As described above, as a device including one or more components, a smart phone 1600 or a module may be provided, and a program for allowing a processor to function as one or more components may be provided. In addition, a readable medium in which the program is recorded may be provided.

### Second application example of user device

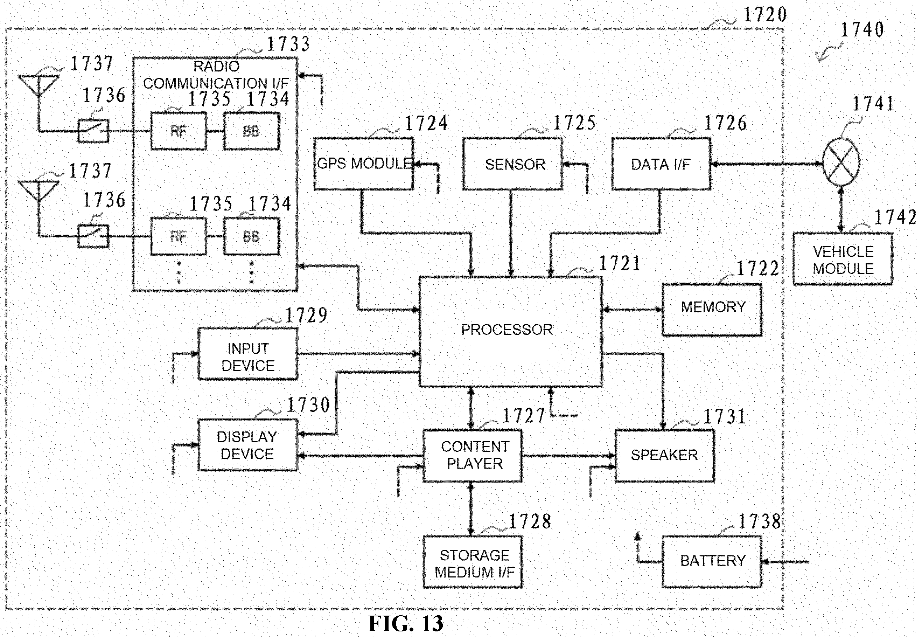

FIG. 13 is a block diagram showing an example of a schematic configuration of a car navigation device 1720 to which the technology of the present disclosure can be applied. The car navigation device 1720 includes a processor 1721, a memory 1722, a global positioning system (GPS) module 1724, a sensor 1725, a data interface 1726, a content pLayer 1727, a storage medium interface 1728, an input device 1729, a display device 1730, a speaker 1731, and a radio communication interface 1733, one or more antenna switches 1736, one or more antennas 1737, and a battery 1738. In one example, the car navigation device 1720 can be implemented as any of the electronic device 100 or 200 as described in the present disclosure.

The processor 1721 may be, for example, a CPU or a SoC, and controls navigation functions and other functions of the car navigation device 1720. The memory 1722 includes a RAM and a ROM, and stores data and programs executed by the processor 1721.

The GPS module 1724 uses a GPS signal received from a GPS satellite to measure the position (such as latitude, longitude, and altitude) of the car navigation device 1720. The sensor 1725 may include a set of sensors such as a gyroscope sensor, a geomagnetic sensor, and an air pressure sensor. The data interface 1726 is connected to, for example, an in-vehicle network 1741 via a terminal not shown, and acquires data (such as vehicle speed data) generated by the vehicle.

The content player 1727 reproduces content stored in a storage medium such as a CD and a DVD, which is inserted into the storage medium interface 1728. The input device 1729 includes, for example, a touch sensor, a button, or a switch configured to detect a touch on the screen of the display device 1730, and receives an operation or information input from a user. The display device 1730 includes a screen such as an LCD or OLED display, and displays an image of a navigation function or reproduced content. The speaker 1731 outputs the sound of the navigation function or the reproduced content.

The radio communication interface 1733 supports any cellular communication scheme such as 4G LTE or 5G NR, and performs wireless communication. The radio communication interface 1733 may generally include, for example, a BB processor 1734 and an RF circuit 1735. The BB processor 1734 may perform, for example, encoding/decoding, modulation/demodulation, and multiplexing/demultiplexing, and perform various types of signal processing for wireless communication. Meanwhile, the RF circuit 1735 may include, for example, a mixer, a filter, and an amplifier, and transmit and receive wireless signals via the antenna 1737. The radio communication interface 1733 may also be a chip module on which a BB processor 1734 and an RF circuit 1735 are integrated. As shown in FIG. 13, the radio communication interface 1733 may include a plurality of BB processors 1734 and a plurality of RF circuits 1735. Although FIG. 13 shows an example in which the radio communication interface 1733 includes a plurality of BB processors 1734 and a plurality of RF circuits 1735, the radio communication interface 1733 may also include a single BB processor 1734 or a single RF circuit 1735.

In addition, in addition to the cellular communication scheme, the radio communication interface 1733 may support other types of wireless communication scheme, such as a short-range wireless communication scheme, a near field communication scheme, and a wireless LAN scheme. In this case, the radio communication interface 1733 may include a BB processor 1734 and an RF circuit 1735 for each wireless communication scheme.

Each of the antenna switches 1736 switches the connection destination of the antenna 1737 between a plurality of circuits included in the radio communication interface 1733, such as circuits for different wireless communication schemes.

The antennas 1737 includes multiple antenna elements, such as multiple antenna arrays for large-scale MIMO. The antennas 1737, for example, can be arranged into a matrix of antenna arrays, and are used by the radio communication interface 1733 to transmit and receive wireless signals.

In addition, the car navigation device 1720 may include an antenna 1737 for each wireless communication scheme. In this case, the antenna switch 1736 may be omitted from the configuration of the car navigation device 1720.

The battery 1738 supplies power to each block of the car navigation device 1720 shown in FIG. 13 via a feeder, and the feeder is partially shown as a dotted line in the figure. The battery 1738 accumulates power provided from the vehicle.

In the car navigation device 1720 shown in FIG. 13, one or more units included in the processing circuitry 101 or 201 may be implemented in the radio communication interface 1733. Alternatively, at least a part of these components may be implemented in the processor 1721. As an example, the car navigation device 1720 includes a part (for example, the BB processor 1734) or the whole of the radio communication interface 1733, and/or a module including the processor 1721, and one or more components may be implemented in the module. In this case, the module may store a program that allows processing to function as one or more components (in other words, a program for allowing the processor to perform operations of one or more components), and may execute the program. As another example, a program for allowing the processor to function as one or more components may be installed in the car navigation device 1720, and the radio communication interface 1733 (for example, the BB processor 1734) and/or the processor 1721 may Execute the procedure. As described above, as a device including one or more components, a car navigation device 1720 or a module may be provided, and a program for allowing the processor to function as one or more components may be provided. In addition, a readable medium in which the program is recorded may be provided.

The technology of the present disclosure may also be implemented as an in-vehicle system (or vehicle) 1740 including one or more of a car navigation device 1720, an in-vehicle network 1741, and a vehicle module 1742. The vehicle module 1742 generates vehicle data such as vehicle speed, engine speed, and failure information, and outputs the generated data to the in-vehicle network 1741.

Although the illustrative embodiments of the present disclosure have been described with reference to the accompanying drawings, the present disclosure is certainly not limited to the above examples. Those skilled in the art may achieve various adaptions and modifications within the scope of the appended claims, and it will be appreciated that these adaptions and modifications certainly fall into the scope of the technology of the present disclosure.

For example, in the above embodiments, the multiple functions included in one module may be implemented by separate means. Alternatively, in the above embodiments, the multiple functions included in multiple modules may be implemented by separate means, respectively. In additions, one of the above functions may be implemented by multiple modules. Needless to say, such configurations are included in the scope of the technology of the present disclosure.

In this specification, the steps described in the flowcharts include not only the processes performed sequentially in chronological order, but also the processes performed in parallel or separately but not necessarily performed in chronological order. Furthermore, even in the steps performed in chronological order, needless to say, the order may be changed appropriately.

Although the present disclosure and its advantages have been described in detail, it will be appreciated that various changes, replacements and transformations may be made without departing from the spirit and scope of the present disclosure as defined by the appended claims. In addition, the terms "include", "comprise" or any other variants of the embodiments of the present disclosure are intended to be non-exclusive inclusion, such that the process, method, article or device including a series of elements includes not only these elements, but also those that are not listed specifically, or those that are inherent to the process, method, article or device. In case of further limitations, the element defined by the sentence "include one" does not exclude the presence of additional same elements in the process, method, article or device including this element.

## Claims

1. An electronic device for a vulnerable road user (VRU), comprising:
processing circuitry configured to
in response to a trigger event, generate a service request message which includes an identifier uniquely identifying a terminal device and service preference information of the VRU;
transmit the service request message to a network-side device; and
receive, from the network-side device, a service configuration determined based on the service preference information.

2. The electronic device according to Claim 1, wherein the trigger event comprises:
a broadcast message is received from a road side unit (RSU) via a PC5 interface, the broadcast message including service contents supported by the RSU and corresponding communication settings.

3. The electronic device according to Claim 2, wherein the broadcast message is triggered by at least one of:
periodicity;
the RSU receiving, from an associated roadside sensing device, information indicating that the VRU has entered a sensation range of the roadside sensing device;
the RSU receiving a Basic Safety Message (BSM), Personal Safety Message (PSM) or VRU Awareness Message (VAM) transmitted by the terminal device of the VRU;
the RSU receiving a BSM, PSM or VSM transmitted by a vehicle device and indicating that the VRU is present in a particular area; and
the RSU receiving, from a core network unit or an application server, an indication indicating that the VRU has entered a coverage range of the RSU.

4. The electronic device according to Claim 1 or 2, wherein the trigger event includes at least one of:
the terminal device of the VRU finding that the VRU is in a certain security risk by receiving and analyzing data transmitted by a vehicle device or a road side unit (RSU);
the terminal device of the VRU receiving, from a core network unit or an application server, information indicating that the VRU is approaching a high-risk area;
the terminal device of the VRU finding that the VRU is entering a high-risk area based on location information; and
the terminal device of the VRU having a battery level below a threshold.

5. The electronic device according to Claim 1, wherein the service preference information indicates at least one of:
a type of a service desired by the VRU;
a communication pattern for the service;
a mode for the VRU to receive a warning alert; and
a trigger condition for the VRU to receive a warning alert.

6. The electronic device according to Claim 5, wherein the type of the service includes at least one of
a service for collision avoidance/road risk warning;
a service for collaborative traffic join and lane change;
a service for positioning assistance; and
a service for message relay or collective forwarding.

7. The electronic device according to Claim 1, wherein the service request message further comprises at least one of
a type of the VRU;
a moving capability of the VRU;
a brake performance of the VRU;
a positioning capability of the terminal device of the VRU; and
a navigation route of the terminal device of the VRU.

8. The electronic device according to Claim 1, wherein the service configuration includes a type, contents and communication settings of the service determined for the VRU.

9. The electronic device according to Claim 8, wherein the service configuration further includes information on a VRU group to which the VRU belongs, wherein VRUs in the VRU group have substantially the same communication settings.

10. The electronic device according to Claim 1, wherein the processing circuitry is further configured to:
receive VRU grouping information broadcast by another VRU;
send a join request to the another VRU; and
receive VRU grouping confirmation information from the another VRU.

11. The electronic device according to Claim 1, wherein the processing circuitry is further configured to:
transmit VRU state information to a road side unit (RSU) via a PC5 interface; and
receive a warning alert from the RSU via the PC5 interface.

12. An electronic device for a network-side device, comprising:
processing circuitry configured to
receive a service request message from a terminal device of a vulnerable road user (VRU), wherein the service request message is generated in response to a trigger event and includes an identifier uniquely identifying the terminal device and service preference information of the VRU;
determine a service configuration for the VRU based on the service preference information; and
transmit the service configuration to the terminal device of the VRU.

13. The electronic device according to Claim 12, wherein the network-side device comprises a road side unit (RSU), a multi-access edge computing (MEC) platform, a core network unit, or an application server.

14. The electronic device according to Claim 12, wherein the processing circuitry is further configured to transmit, via a road side unit (RSU), a broadcast message including service contents supported by the RSU and corresponding communication settings as the trigger event, in response to at least one of:
periodicity;
the RSU receiving, from an associated roadside sensing device, information indicating that the VRU has entered a sensation range of the roadside sensing device;
the RSU receiving a Basic Safety Message (BSM), Personal Safety Message (PSM) or VRU Awareness Message (VAM) transmitted by the terminal device of the VRU;
the RSU receiving a BSM, PSM or VSM transmitted by a vehicle device and indicating that the VRU is present in a particular area; and
the RSU receiving, from a core network unit or an application server, an indication indicating that the VRU has entered a coverage range of the RSU.

15. The electronic device according to Claim 12, wherein the service preference information indicates at least one of:
a type of a service desired by the VRU;
a communication pattern for the service;
a mode for the VRU to receive a warning alert; and
a trigger condition for the VRU to receive a warning alert.

16. The electronic device according to Claim 15, wherein the type of the service includes at least one of
a service for collision avoidance or road risk warning;
a service for collaborative traffic join and lane change;
a service for positioning assistance; and
a service for message relay or collective forwarding.

17. The electronic device according to Claim 12, wherein the service configuration includes a type, contents and communication settings of the service determined for the VRU.

18. The electronic device according to Claim 12, wherein the processing circuitry is further configured to:
update communication settings of the service for the VRU based on a risk level of an environment in which the VRU is located; and
transmit the updated communication settings to the terminal device of the VRU.

19. The electronic device according to Claim 12, wherein the processing circuitry is further configured to:
determine a VRU group to which the VRU belongs according to a predetermined group management criteria, wherein VRUs in the VRU group have substantially the same communication settings; and
include information of the VRU group in the service configuration for transmission to the terminal device of the VRU.

20. The electronic device according to Claim 12, wherein the processing circuitry is further configured to:
receive VRU state information of the VRU and state information of a vehicle from a roadside sensing device;
determine whether there is a collision risk between the VRU and the vehicle based on the VRU state information and the state information of the vehicle; and
transmit a warning alert to the VRU in response to determining that there is a collision risk.

21. The electronic device according to Claim 20, wherein the processing circuitry is further configured to:
receive VRU related information from the terminal device of the VRU; and
calibrate the VRU state information by matching the VRU related information received from the terminal device of the VRU with the VRU state information received from the roadside sensing device, and associate the VRU related information with the VRU.

22. An electronic device for a vehicle, comprising:
processing circuitry configured to
receive a V2X warning for a vulnerable road user (VRU) from a road side unit (RSU);
compare a difference between the V2X warning and a real-world scene; and
adjust a priority of the V2X warning based on a result of the comparison.

23. The electronic device according to Claim 22, wherein the processing circuitry is further configured to:
confirm a confidence of the V2X warning and/or the state information of the vehicle with the RSU, in a case where the difference between the V2X warning and the real-world scene exceeds a predetermine threshold.

24. A communication method, comprising:
in response to a trigger event, generating a service request message which includes an identifier uniquely identifying a terminal device and service preference information of the VRU;
transmitting the service request message to a network-side device; and
receiving, from the network-side device, a service configuration determined based on the service preference information.

25. A communication method, comprising:
receiving a service request message from a terminal device of a vulnerable road user (VRU), wherein the service request message is generated in response to a trigger event and includes an identifier uniquely identifying the terminal device and service preference information of the VRU;
determining a service configuration for the VRU based on the service preference information; and
transmitting the service configuration to the terminal device of the VRU.

26. A non-transitory computer-readable storage medium storing executable instructions which, when executed, implement the communication method of claim 24 or 25.
